(19) Europäisches Patentamt
European Patent Office
Office européen des brevets

(11) **EP 4 322 031 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
***G06F 16/9535*** (2019.01)

(21) Application number: **22852095.3**

(22) Date of filing: **30.07.2022**

(86) International application number:
**PCT/CN2022/109297**

(87) International publication number:
**WO 2023/011382 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021 CN 202110877429**

(71) Applicant: **Huawei Technologies Co., Ltd.
Longgang
Shenzhen, Guangdong 518129 (CN)**

(72) Inventors:
• **GUO, Wei**
**Shenzhen, Guangdong 518129 (CN)**
• **QIN, Jiarui**
**Shenzhen, Guangdong 518129 (CN)**
• **TANG, Ruiming**
**Shenzhen, Guangdong 518129 (CN)**
• **LIU, Zhirong**
**Shenzhen, Guangdong 518129 (CN)**
• **HE, Xiuqiang**
**Shenzhen, Guangdong 518129 (CN)**
• **ZHANG, Weinan**
**Shanghai 200240 (CN)**
• **YU, Yong**
**Shanghai 200240 (CN)**

(74) Representative: **Maiwald GmbH
Engineering
Elisenhof
Elisenstrasse 3
80335 München (DE)**

(54) **RECOMMENDATION METHOD, RECOMMENDATION MODEL TRAINING METHOD, AND RELATED PRODUCT**

(57) Embodiments of this application provide a recommendation method, a method for training a recommendation model, and a related product. The recommendation method includes: obtaining to-be-predicted data; obtaining a plurality of target reference samples from a plurality of reference samples based on a similarity between the to-be-predicted data and the plurality of reference samples, where each reference sample and the to-be-predicted data each include user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data; obtaining target feature information of the to-be-predicted data based on the plurality of target reference samples and the to-be-predicted data; obtaining an output value through a deep neural network DNN by using the target feature information as input; and determining, based on the output value, whether to recommend the target item to the target user. Embodiments of this application help improve recommendation accuracy.

FIG. 4

**Description**

This application claims priority to Chinese Patent Application No. 202110877429.9, filed with the China National Intellectual Property Administration on July 31, 2021 and entitled "RECOMMENDATION METHOD, METHOD FOR TRAINING RECOMMENDATION MODEL, AND RELATED PRODUCT", which is incorporated herein by reference in its entirety.

**TECHNICAL FIELD**

The present invention relates to the field of artificial intelligence technologies, and in particular, to a recommendation method, a method for training a recommendation model, and a related product.

**BACKGROUND**

User behavior prediction based on table data is an important task, and has a large amount of practical application, for example, prediction for a click-through rate (Click-Through-Rate, CTR) in online advertising, rating prediction and commodity sorting in a recommendation system, and fraud account detection. Data captured in these application scenarios is stored in a tabular format. Each row in a table corresponds to a sample, and each column of each sample corresponds to a unique feature.

Extracting a valuable relationship or pattern from tabular data is the key to accurate learning of a machine learning system. To better utilize the tabular data, full mining of abundant information included in rows and columns of the tabular data is of great importance. In an early model such as logistic regression, a support vector machine and a tree model perform prediction by using a row sample as input. In a deep model, a class feature of a row sample is mapped to an embedded vector, and then an eigenvector of a single row sample is used to predict user behavior. In recent years, a model based on feature interaction and a model based on a user sequence have become mainstream models for modeling of tabular data. The model based on feature interaction is intended to enable interaction between features of columns of each row sample of tabular data, to fully mine user sequence features to predict user behavior and perform recommendation based on predicted user behavior.

However, in the foregoing models, a single sample is separately used to predict user behavior. Consequently, accuracy of performing recommendation based on predicted user behavior is low.

**SUMMARY**

This application provides a recommendation method, a method for training a recommendation model, and a related product, to perform recommendation through fusion of feature information of target reference samples, so as to improve recommendation accuracy.

According to a first aspect, an embodiment of this application provides a recommendation method, including: obtaining to-be-predicted data; obtaining a plurality of target reference samples from a plurality of reference samples based on a similarity between the to-be-predicted data and the plurality of reference samples, where each reference sample and the to-be-predicted data each include user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data; obtaining target feature information of the to-be-predicted data based on the plurality of target reference samples and the to-be-predicted data, where the target feature information includes a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples; obtaining an output value through a deep neural network DNN by using the target feature information as input; and determining, based on the output value, whether to recommend the target item to the target user.

The output value may be a probability value, and the probability value indicates a probability that the target user performs an operation on the target item. For different target items, the probability that the target user performs an operation on the target item may be understood in different manners. For example, when the target item is an application, the probability that the target user performs an operation on the target item may be understood as a probability that the target user clicks/taps the application. For another example, when the target item is a song, the probability that the target user performs an operation on the target item may be understood as a probability that the target user likes the song. For still another example, when the target item is a commodity, the probability that the target user performs an operation on the target item may be understood as a probability that the target user purchases the commodity.

In actual application, after the probability value is obtained, the probability value may be post-processed to obtain the output value. For example, when the probability value is greater than a probability threshold, the output value is 1; or when the probability value is less than or equal to the threshold, the output value is 0, where 0 indicates that the target user is not to perform an operation on the target item, and 1 indicates that the target user is to perform an operation on the target item.

In a single-item recommendation scenario, when the output value is greater than a threshold, it is determined that the target item is to be recommended to the target user; or when the output value is less than or equal to the threshold, it is determined that the target item is not to be recommended to the target user. In addition, when the solution of this application is applied to a scenario in which an item is selected from a plurality of candidate items for recommendation, an output value corresponding to each candidate item may be obtained; and then a candidate item with a largest output value is recommended to the target user, or output values of the plurality of candidate items are sorted, and a candidate item ranked top (for example, top 10 candidate items) is recommended to the target user. For example, during song recommendation, an output value of each candidate song in a song library may be obtained, and then songs whose output values ranked top 10 are recommended to the target user.

It can be learned that, in addition to feature information of the to-be-predicted data, the target feature information obtained in this application further includes feature information obtained by vectorizing the plurality of target reference samples and then performing fusion on vectorized target reference samples. The target reference sample is selected from the plurality of reference samples based on the similarity between the to-be-predicted data and the plurality of reference samples, and the target reference sample and the to-be-predicted data have partially same user feature field data and/or item feature field data. Therefore, the target reference sample is a reference sample similar to the to-be-predicted data among the plurality of reference samples. Therefore, user behavior in the target reference sample may provide reference and experience for predicting behavior of the target user. In this way, when the target feature information including a feature of the target reference sample is used to predict an output value, the predicted output value can be accurate. An item is recommended based on the output value, so that recommendation accuracy is improved.

In some possible implementations, the plurality of target reference samples further include label data; and that the second target eigenvector group is obtained by vectorizing the plurality of target reference samples and then performing fusion on vectorized target reference samples is specifically as follows: The second target eigenvector group is obtained by vectorizing user feature field data, item feature field data, and the label data of the plurality of target reference samples and then performing fusion on vectorized data.

The user feature data of the target reference sample indicates a feature of a reference user, and the item feature data of the target reference sample indicates a feature of a reference item. The target reference sample further carries the label data, that is, real operation behavior performed by the reference user on the reference item. Therefore, the second target eigenvector group includes the real operation behavior performed by the reference user on the reference item. In this case, when the target feature information is used to predict behavior of the target user, operation behavior to be performed by the target user on the target item may be predicted based on the real operation behavior performed by the reference user on the reference item, to obtain an output value, so that the predicted output value is accurate, and therefore item recommendation accuracy is improved.

In some possible implementations, the target feature information further includes a third target eigenvector group, the third target eigenvector group is obtained by performing pairwise interaction between target eigenvectors in a first vector group, and the first vector group includes the first target eigenvector group and the second target eigenvector group.

It should be noted that, in the foregoing descriptions, pairwise interaction is performed between the target eigenvectors in the first vector group, but in actual application, pairwise interaction may be performed flexibly. For example, pairwise interaction may be performed between a plurality of first target eigenvectors in the first target eigenvector group to obtain a plurality of third target eigenvectors; or pairwise interaction may be performed between a plurality of second target eigenvectors in the second target eigenvector group to obtain a plurality of third target eigenvectors.

It can be learned that, in this implementation, pairwise interaction is performed between the target eigenvectors in the first vector group to obtain a plurality of third target eigenvectors, so that the target feature information further includes higher-order feature information, to be specific, the third target eigenvector may represent a relationship between user behavior. Therefore, behavior is predicted by using the higher-order feature information, so that accuracy of an output value can be further improved. For example, when a first target eigenvector indicates that a user is 28 years old, and another first target eigenvector indicates that the user is a male, a third target eigenvector obtained through interaction between the two target eigenvectors indicates that the user is a 28-year-old male. When each target eigenvector is separately used for prediction, if the target item meets a requirement of a 28-year-old person or meets a requirement of a male, it is considered that there is a specific probability that the target user performs an operation on the target item, and an obtained output value is usually greater than a probability threshold. However, after interaction is performed between target eigenvectors, there is a specific probability that the target user performs an operation on the target item and an obtained output value is greater than the probability threshold only when the target item meets a requirement of a 28-year-old male. Therefore, the obtained output value is accurate, and recommendation accuracy is further improved.

In some possible implementations, a plurality of first target eigenvectors in the first target eigenvector group are concatenated to obtain a second eigenvector of the to-be-predicted data; a plurality of first eigenvectors of each target reference sample are concatenated to obtain a second eigenvector of each target reference sample, where the plurality of first eigenvectors of each target reference sample are obtained by vectorizing the target reference sample; a similarity between the second eigenvector of each target reference sample and the second eigenvector of the to-be-predicted data is obtained; a weight of each target reference sample is determined based on the similarity between the second eigenvector of each target reference sample and the second eigenvector of the to-be-predicted data; and fusion is performed on first eigenvectors of the plurality of target reference samples in a same feature field based on the weight of each target reference sample to obtain the second target eigenvector group.

It can be learned that, in this implementation, based on an attention mechanism, a target reference sample with a highest degree of association with the to-be-predicted data among the plurality of target reference samples has a largest weight. In this way, feature information mainly indicated by the second target eigenvector obtained through fusion is feature information of the target reference sample with the highest degree of association, and the target reference sample with the highest degree of association is used as much as possible to guide prediction for behavior of the target user, so that a predicted probability that the target user performs an operation on the target item is more accurate, and therefore item recommendation accuracy is improved.

In some possible implementations, before the obtaining a plurality of target reference samples from a plurality of reference samples based on a similarity between the to-be-predicted data and the plurality of reference samples, the method further includes: obtaining a plurality of raw samples, where each raw sample includes user feature field data and item feature field data; and performing inverted indexing on the plurality of raw samples by using a plurality of pieces of user feature field data and a plurality of pieces of item feature field data of the to-be-predicted data as elements to obtain the plurality of reference samples.

Optionally, the plurality of raw samples are first inverted to obtain an inverted list. For example, user feature field data and item feature field data of each reference sample may be used as elements for inversion, to obtain an inverted list shown in Table 2. For example, a $1^{st}$ column in each row in the inverted list is an element, that is, one piece of field data (user feature field data or item feature field data) in the plurality of reference samples, and a $2^{nd}$ column is a reference sample including the field data among the plurality of reference samples. After the inverted list is obtained, the plurality of raw samples are indexed by using each piece of user feature field data and each piece of item feature field data of the to-be-predicted data as elements, to obtain the plurality of reference samples. To be specific, a reference sample corresponding to each piece of user feature field data and a reference sample corresponding to each item feature field may be obtained through indexing based on a correspondence in the inverted list; and then the reference sample corresponding to each piece of user feature field data and the reference sample corresponding to each item feature field are combined and deduplicated to obtain the plurality of reference samples. For example, the to-be-predicted data is [U4, LA, Student, L2, Cell phone, B3]. The U4, LA, Student, L2, Cell phone, and B3 are all used as search terms to obtain, from the inverted list shown in Table 2, a reference sample [sample 1, sample 3] corresponding to the LA, a reference sample [sample 1, sample 2, sample 3] corresponding to the Student, a reference sample [sample 3] corresponding to the L2, and a reference sample [sample 3, sample 4] corresponding to the Cell phone, and a reference sample [sample 4] corresponding to the B3. Then all the reference samples obtained from the inverted list are combined and deduplicated to obtain a plurality of reference samples: [sample 1, sample 2, sample 3, sample 4].

It can be learned that, in this implementation, the plurality of raw samples are sorted through inversion to obtain the inverted list. Because the inverted list is used, the plurality of reference samples can be quickly obtained from the plurality of raw samples through indexing by using the inverted list, and some irrelevant raw samples are excluded. In this way, similarity calculation does not need to be performed on each raw sample, so that calculation pressure is reduced, the target reference sample can be quickly selected, and item recommendation efficiency is improved.

According to a second aspect, an embodiment of this application provides a method for training a recommendation model. The recommendation model includes a feature information extraction network and a deep neural network DNN, and the method includes: obtaining a plurality of training samples, where each training sample includes user feature field data and item feature field data; obtaining a plurality of target training samples from a plurality of second training samples based on a similarity between a first training sample and the plurality of second training samples, where the first training sample is one of the plurality of training samples, the plurality of second training samples are some or all of the plurality of training samples other than the first training sample, user feature field data of the first training sample indicates a feature of a first reference user, item feature field data of the first training sample indicates a feature of a first reference item, and the first training sample and each target training sample have partially same user feature field data and/or item feature field data; inputting the first training sample and the plurality of target training samples to the feature information extraction network to obtain target feature information of the first training sample, where the target feature information includes a fourth target eigenvector group and a fifth target eigenvector group, the fourth target eigenvector group is obtained by vectorizing the first training sample through the feature information extraction network, and the fifth target eigenvector group is obtained by vectorizing the plurality of target training samples through the feature information extraction network and then performing fusion on vectorized target training samples; inputting the target feature information to the deep neural network DNN to obtain an output value, where the output value represents a probability that the first reference user performs an operation on the first reference item; and training the recommendation model based on the output value and label data of the first training sample to obtain a target recommendation model.

It should be noted that the first training sample and the plurality of target training samples are input to the feature information extraction network of the recommendation model, to construct the target feature information including more abundant information. In this way, the target feature information not only includes feature information of the first training sample, that is, a plurality of fourth target eigenvectors, but also includes feature information obtained by vectorizing the plurality of target training samples and then performing fusion on vectorized target training samples, that is, a plurality of fifth target eigenvectors. In addition, the target training sample is selected from the plurality of second training samples based on the similarity between the first training sample and the plurality of second training samples. Therefore, the target training sample is a training sample similar to the first training sample. Therefore, when the target feature information of the first training sample is used for model training, user behavior may be predicted with reference to the feature information (namely, priori knowledge) obtained by vectorizing the plurality of target training samples and then performing fusion on vectorized target training samples, to obtain an output value, so that the predicted output value is more accurate, a loss during training is small, and the model can more easily converge. In addition, because user feature information of the plurality of target training samples are used for reference, the model can remember more abundant user feature information, so that the trained model is more accurate and robust.

In some possible implementations, that the fifth target eigenvector group is obtained by vectorizing the plurality of target training samples and then performing fusion on vectorized target training samples is specifically as follows: The fifth target eigenvector group is obtained by vectorizing user feature field data, item feature field data, and label data of the plurality of target training samples through the feature information extraction network and then performing fusion on vectorized data.

It can be learned that, in this implementation, the target training sample carries the label data. Label data of each target training sample indicates real operation behavior, in the target training sample, that is performed by a user on an item. Therefore, when behavior of a target user is predicted by using the target feature information, the probability that the first reference user in the first training sample performs an operation on the first reference item may be predicted based on the real operation behavior, in the target training sample, that is performed by the user on the item, so that the predicted output value is accurate. Because the predicted output value is accurate, a loss during training is small, a model training period is shortened, and a model convergence speed is increased.

In some possible implementations, the target feature information further includes a sixth target eigenvector group, the sixth target eigenvector group is obtained by performing pairwise interaction between target eigenvectors in a second vector group through the feature information extraction network, and the second vector group includes the fourth target eigenvector group and the fifth target eigenvector group.

It can be learned that, in this implementation, pairwise interaction is performed between the target eigenvectors in the second vector group to obtain a plurality of sixth target eigenvectors, so that the target feature information further includes higher-order feature information, to be specific, the sixth target eigenvector may represent a higher-order feature of the first reference user. Therefore, behavior is predicted by using the higher-order feature, so that accuracy of prediction for user behavior can be further improved, and a model convergence speed can be further increased. For example, when a fourth target eigenvector indicates that a user is 28 years old, and another fourth target eigenvector indicates that the user is a male, a sixth target eigenvector obtained through interaction between the two fourth target eigenvectors indicates that the user is a 28-year-old male. When each fourth target eigenvector is separately used for prediction, if an item meets a requirement of a 28-year-old person or meets a requirement of a male, it is considered that there is a specific probability that the user performs an operation on the item. However, after interaction is performed between target eigenvectors, there is a specific probability that the user performs an operation on the item only when the item meets a requirement of a 28-year-old male. Therefore, accuracy of prediction for user behavior is improved.

In some possible implementations, the performing fusion includes: concatenating a plurality of fourth target eigenvectors in the fourth target eigenvector group to obtain a second eigenvector of the first training sample; concatenating a plurality of first eigenvectors of each target training sample to obtain a second eigenvector of each target training sample, where the plurality of first eigenvectors of each target training sample are obtained by vectorizing the target training sample; obtaining a similarity between the second eigenvector of each target training sample and the second eigenvector of the first training sample; determining a weight of each target training sample based on the similarity between the second eigenvector of each target training sample and the second eigenvector of the first training sample; and performing fusion on first eigenvectors of the plurality of target training samples in a same feature field based on the weight of each target training sample to obtain the fifth target eigenvector group.

It can be learned that, based on an attention mechanism, a target training sample with a highest degree of association with the first training sample among the plurality of target training samples has a largest weight. In this way, feature information mainly indicated by the fifth target eigenvector obtained through fusion is feature information of the target training sample. Therefore, the target training sample with the highest degree of association is used as much as possible to guide prediction for behavior of the first reference user, so that a predicted probability that the first reference user performs an operation on the first reference item is more accurate, and a model convergence speed is increased.

In some possible implementations, before the obtaining a plurality of target training samples from a plurality of second training samples based on a similarity between a first training sample and the plurality of second training samples, the method further includes: performing inverted indexing on the plurality of training samples by using a plurality of pieces of user feature field data and a plurality of pieces of item feature field data of the first training sample as elements to obtain the plurality of second training samples.

Optionally, the plurality of training samples are inverted based on the user feature field data and the item feature field data of each training sample to obtain the inverted list. The inverted list includes a correspondence between an element and a sample. As shown in Table 2, a 1st column in each row in the inverted list is an element, that is, one piece of field data (user feature field data or item feature field data) in a sample, and a 2nd column is a reference sample including the field data among the plurality of reference samples. After the inverted list is obtained, the plurality of second training samples are obtained from the plurality of training samples through indexing by using each piece of user feature field data and each piece of item feature field data of the first training sample as elements. To be specific, a training sample corresponding to each piece of user feature field data and a training sample corresponding to each item feature field may be obtained based on the correspondence in the inverted list; and then the training sample corresponding to each piece of user feature field data and the training sample corresponding to each item feature field are combined and deduplicated to obtain the plurality of second training samples.

It can be learned that, in this implementation, the plurality of training samples are sorted through inverted indexing to obtain the inverted list. Because the inverted list is used, the plurality of second training samples can be quickly found by using the inverted list, and similarity calculation does not need to be performed on each training sample, so that calculation pressure is reduced, the plurality of target training samples can be quickly obtained from the plurality of second training samples, and a model training speed is increased.

According to a third aspect, an embodiment of this application provides a recommendation apparatus, including an obtaining unit and a processing unit. The obtaining unit is configured to obtain to-be-predicted data. The processing unit is configured to: obtain a plurality of target reference samples from a plurality of reference samples based on a similarity between the to-be-predicted data and the plurality of reference samples, where each reference sample and the to-be-predicted data each include user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data; obtain target feature information of the to-be-predicted data based on the plurality of target reference samples and the to-be-predicted data, where the target feature information includes a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples; obtain an output value through a deep neural network DNN by using the target feature information as input; and determine, based on the output value, whether to recommend the target item to the target user.

In some possible implementations, the plurality of target reference samples further include label data; and that the second target eigenvector group is obtained by vectorizing the plurality of target reference samples and then performing fusion on vectorized target reference samples is specifically as follows: The second target eigenvector group is obtained by vectorizing user feature field data, item feature field data, and the label data of the plurality of target reference samples and then performing fusion on vectorized data.

In some possible implementations, the target feature information further includes a third target eigenvector group, the third target eigenvector group is obtained by performing pairwise interaction between target eigenvectors in a first vector group, and the first vector group includes the first target eigenvector group and the second target eigenvector group.

In some possible implementations, in the aspect of performing fusion by the processing unit, the processing unit is specifically configured to: concatenate a plurality of first target eigenvectors in the first target eigenvector group to obtain a second eigenvector of the to-be-predicted data; concatenate a plurality of first eigenvectors of each target reference sample to obtain a second eigenvector of each target reference sample, where the plurality of first eigenvectors of each target reference sample are obtained by vectorizing the target reference sample; obtain a similarity between the second eigenvector of each target reference sample and the second eigenvector of the to-be-predicted data; determine a weight of each target reference sample based on the similarity between the second eigenvector of each target reference sample and the second eigenvector of the to-be-predicted data; and perform fusion on first eigenvectors of the plurality of target reference samples in a same feature field based on the weight of each target reference sample to obtain the second target eigenvector group.

Before the processing unit obtains the plurality of target reference samples from the plurality of reference samples based on the similarity between the to-be-predicted data and the plurality of reference samples, the processing unit is further configured to: obtain a plurality of raw samples, where each raw sample includes user feature field data and item feature field data; and

perform inverted indexing on the plurality of raw samples by using a plurality of pieces of user feature field data and a plurality of pieces of item feature field data of the to-be-predicted data as elements to obtain the plurality of reference samples.

According to a fourth aspect, an embodiment of this application provides an apparatus for training a recommendation model. The recommendation model includes a feature information extraction network and a deep neural network DNN, and the apparatus includes an obtaining unit and a processing unit. The obtaining unit is configured to obtain a plurality of training samples, where each training sample includes user feature field data and item feature field data. The processing unit is configured to: obtain a plurality of target training samples from a plurality of second training samples based on a similarity between a first training sample and the plurality of second training samples, where the first training sample is one of the plurality of training samples, the plurality of second training samples are some or all of the plurality of training samples other than the first training sample, user feature field data of the first training sample indicates a feature of a first reference user, item feature field data of the first training sample indicates a feature of a first reference item, and the first training sample and each target training sample have partially same user feature field data and/or item feature field data; input the first training sample and the plurality of target training samples to the feature information extraction network to obtain target feature information of the first training sample, where the target feature information includes a fourth target eigenvector group and a fifth target eigenvector group, the fourth target eigenvector group is obtained by vectorizing the first training sample through the feature information extraction network, and the fifth target eigenvector group is obtained by vectorizing the plurality of target training samples through the feature information extraction network and then performing fusion on vectorized target training samples; input the target feature information to the deep neural network DNN to obtain an output value, where the output value represents a probability that the first reference user performs an operation on the first reference item; and train the recommendation model based on the output value and label data of the first training sample to obtain a target recommendation model.

In some possible implementations, that the fifth target eigenvector group is obtained by vectorizing the plurality of target training samples and then performing fusion on vectorized target training samples is specifically as follows: The fifth target eigenvector group is obtained by vectorizing user feature field data, item feature field data, and label data of the plurality of target training samples through the feature information extraction network and then performing fusion on vectorized data.

In some possible implementations, the target feature information further includes a sixth target eigenvector group, the sixth target eigenvector group is obtained by performing pairwise interaction between target eigenvectors in a second vector group through the feature information extraction network, and the second vector group includes the fourth target eigenvector group and the fifth target eigenvector group.

In some possible implementations, in the aspect of performing fusion by the processing unit, the processing unit is specifically configured to: concatenate a plurality of fourth target eigenvectors in the fourth target eigenvector group to obtain a second eigenvector of the first training sample; concatenate a plurality of first eigenvectors of each target training sample to obtain a second eigenvector of each target training sample, where the plurality of first eigenvectors of each target training sample are obtained by vectorizing the target training sample; obtain a similarity between the second eigenvector of each target training sample and the second eigenvector of the first training sample; determine a weight of each target training sample based on the similarity between the second eigenvector of each target training sample and the second eigenvector of the first training sample; and perform fusion on first eigenvectors of the plurality of target training samples in a same feature field based on the weight of each target training sample to obtain the fifth target eigenvector group.

In some possible implementations, before the processing unit obtains the plurality of target reference samples from the plurality of reference samples based on the similarity between the to-be-predicted data and the plurality of reference samples, the processing unit is further configured to:

perform inverted indexing on the plurality of training samples by using each piece of user feature field data and each piece of item feature field data of each training sample as elements to obtain an inverted list, and obtain the plurality of second training samples from the inverted list by using each piece of user feature field data and each piece of item feature field data of the first training sample as search terms.

In some possible implementations, before the processing unit obtains the plurality of target training samples from the plurality of second training samples based on the similarity between the first training sample and the plurality of second training samples, the processing unit is further configured to:

perform inverted indexing on the plurality of training samples by using a plurality of pieces of user feature field data and a plurality of pieces of item feature field data of the first training sample as elements to obtain the plurality of second training samples.

According to a fifth aspect, an embodiment of this application provides an electronic device, including: a memory, configured to store a program; and a processor, configured to execute the program stored in the memory, where when the program stored in the memory is executed, the processor is configured to implement the method in the first aspect or the second aspect.

According to a sixth aspect, an embodiment of this application provides a computer-readable medium. The computer-readable medium stores program code to be executed by a device. The program code is used to implement the method in the first aspect or the second aspect.

According to a seventh aspect, an embodiment of this application provides a computer program product including instructions. When the computer program product runs on a computer, the computer is enabled to implement the method in the first aspect or the second aspect.

According to an eighth aspect, an embodiment of this application provides a chip. The chip includes a processor and a data interface. The processor reads, through the data interface, instructions stored in a memory, to implement the method in the first aspect or the second aspect.

Optionally, in an implementation, the chip may further include a memory. The memory stores instructions. The processor is configured to execute the instructions stored in the memory. When the instructions are executed, the processor is configured to implement the method in the first aspect or the second aspect.

## BRIEF DESCRIPTION OF DRAWINGS

FIG. 1 is a schematic diagram of a main framework of artificial intelligence according to an embodiment of this application;

FIG. 2 is a schematic diagram of a system architecture according to an embodiment of this application;

FIG. 3 is a diagram of a hardware structure of a chip according to an embodiment of this application;

FIG. 4 is a schematic flowchart of a recommendation method according to an embodiment of this application;

FIG. 5 is a schematic diagram of interaction and concatenation between eigenvectors according to an embodiment of this application;

FIG. 6 is a diagram of a structure of a model according to an embodiment of this application;

FIG. 7 is a schematic flowchart of a method for training a recommendation model according to an embodiment of this application;

FIG. 8 is a diagram of comparison between user behavior prediction processes according to an embodiment of this application;

FIG. 9 is a schematic diagram of application recommendation according to an embodiment of this application;

FIG. 10 is a schematic diagram of commodity recommendation according to an embodiment of this application;

FIG. 11 is a schematic diagram of song recommendation according to an embodiment of this application;

FIG. 12 is a diagram of a structure of a recommendation apparatus according to an embodiment of this application;

FIG. 13 is a diagram of a structure of an apparatus for training a recommendation model according to an embodiment of this application; and

FIG. 14 is a diagram of a structure of an electronic device according to an embodiment of this application.

## DESCRIPTION OF EMBODIMENTS

The following describes technical solutions in embodiments of the present invention with reference to accompanying drawings in embodiments of the present invention. Clearly, the described embodiments are merely some but not all of embodiments of the present invention. All other embodiments obtained by a person of ordinary skill in the art based on embodiments of the present invention without creative efforts shall fall within the protection scope of the present invention.

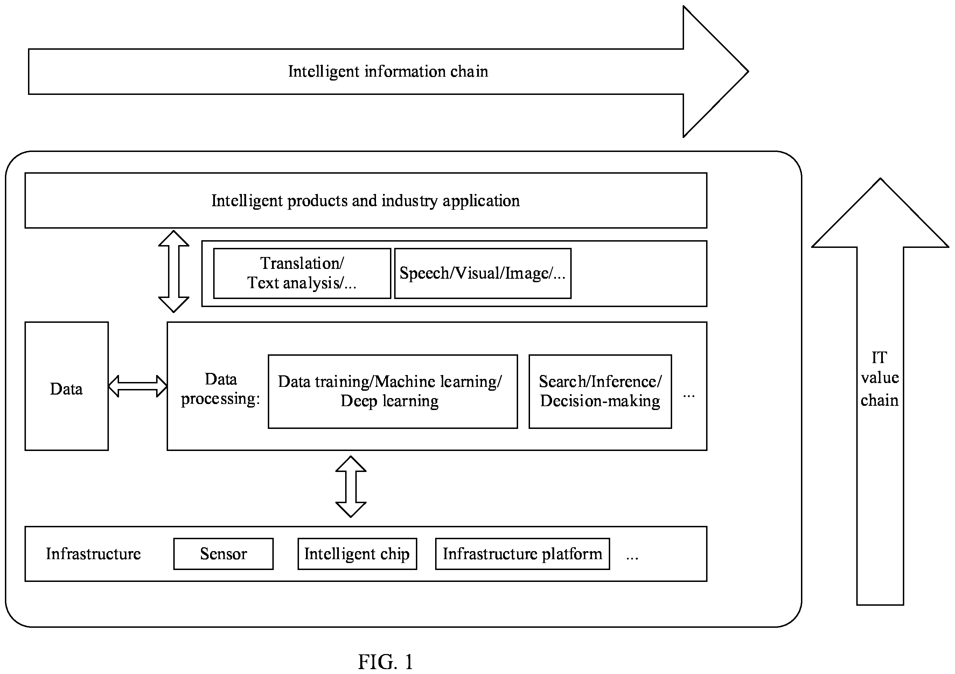

FIG. 1 is a schematic diagram of a main framework of artificial intelligence according to an embodiment of this application. The main framework describes an overall operation process of an artificial intelligence system, and adapts to a general requirement in the field of artificial intelligence.

The following describes the main framework of artificial intelligence from two dimensions: an "intelligent information chain" (a horizontal axis) and an "IT value chain" (a vertical axis).

The "intelligent information chain" indicates a process from data obtaining to data processing. For example, the "intelligent information chain" may be a general process of intelligent information perception, intelligent information representation and formation, intelligent inference, intelligent decision-making, and intelligent execution and output. In this process, data undergoes a refining process of "data - information - knowledge - intelligence".

The "IT value chain" is an industrial ecological process from underlying infrastructure of artificial intelligence to information (providing and processing technical implementations) to a system, and indicates value brought by artificial intelligence to the information technology industry.

(1) Infrastructure:

Infrastructure provides computing capability support for the artificial intelligence system, to communicate with the outside world and implement support by using an infrastructure platform. Communication with the outside is performed through a sensor. A computing capability is provided by an intelligent chip. For example, the intelligent chip may be a hardware acceleration chip such as a central processing unit (central processing unit, CPU), a neural-network processing unit (Neural-network Processing Unit, NPU), a graphics processing unit (English: graphics processing unit, GPU for short), an application-specific integrated circuit (Application Specific Integrated Circuit, ASIC), or a field programmable gate array (Field Programmable Gate Array, FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computation.

(2) Data:

Data at an upper layer of the infrastructure indicates a data source in the field of artificial intelligence. The data relates to graphics, images, speech, and text, and further relates to internet of things data of conventional devices, and includes service data of a conventional system and perception data such as force, displacement, a liquid level, temperature, and humidity.

(3) Data processing:

Data processing usually includes data training, machine learning, deep learning, searching, inference, decision-making, and other methods.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. Typical functions are searching, matching, and prediction.

The decision-making is a process of making a decision after intelligent information is inferred, and usually provides classification, sorting, prediction, and other functions.

(4) General capabilities:

After data undergoes the foregoing data processing, some general capabilities may be further formed based on a data processing result. For example, the general capabilities may be an algorithm or a general system, for example, translation, text analysis, user behavior prediction, computer vision processing, speech recognition, and image recognition.

(5) Intelligent products and industry application:

Intelligent products and industry application are products and application of the artificial intelligence system in various fields, are obtained by encapsulating an overall artificial intelligence solution, and implement productization and practical application of intelligent information decision-making. Application fields of the artificial intelligence system include intelligent manufacturing, intelligent transportation, smart home, intelligent healthcare, intelligent security protection, autonomous driving, intelligent terminals, and the like.

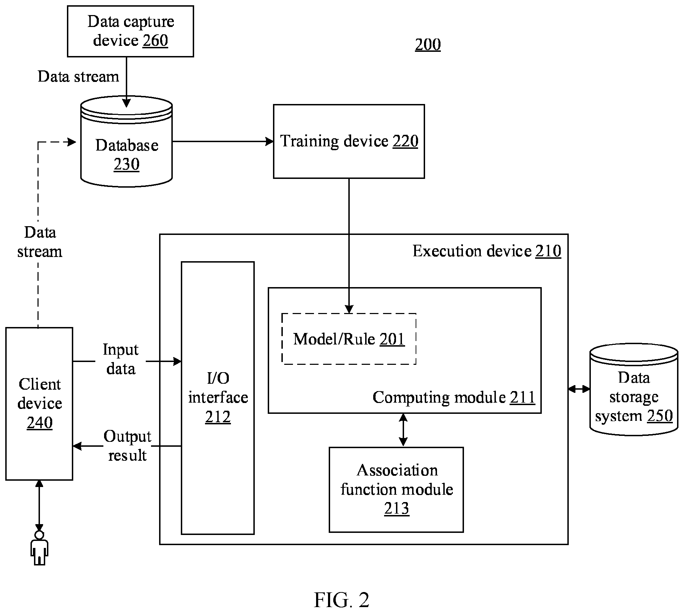

FIG. 2 is a schematic diagram of a system architecture 200 according to an embodiment of this application. A data capture device 260 is configured to capture multi-field categorical data, namely, a training sample, that includes user feature field data, item feature field data, and label data, and store the training sample to a database 230. A training device 220 generates a model/rule 201 based on a training sample maintained in the database 230. The following describes in more detail how the training device 220 obtains the model/rule 201 based on the training sample. The model/rule 201 can process to-be-predicted data to obtain an output value, that is, a probability that a target user performs an operation on a target item, so as to determine, based on the output value, whether to recommend the target item to the target user.

The model/rule obtained by the training device 220 may be applied to different systems or devices. In FIG. 2, an execution device 210 is configured with an I/O interface 212 to exchange data with an external device. A "user" may input data to the I/O interface 212 by using a client device 240, for example, may input to-be-predicted data to the I/O interface 212 by using the client device 240. The to-be-predicted data includes user feature field data and item feature field data. A purpose of inputting, by the "user", the to-be-predicted data to the execution device 210 is to obtain an output value, so as to obtain a probability that a target user performs an operation on a target item.

The execution device 210 may call data, code, and the like stored in a data storage system 250, and may also store data, instructions, and the like to the data storage system 250. The data storage system 250 stores a large quantity of reference samples, and the reference samples may be training samples maintained in the database 230. To be specific, the database 230 may migrate data to the data storage system 250.

An association function module 213 analyzes the to-be-predicted data, and finds a plurality of target reference samples from the reference samples maintained in the data storage system 250.

A computing module 211 processes, by using the model/rule 201, the plurality of target reference samples found by the association function module 213 and the to-be-predicted data. Specifically, the computing module 211 calls the model/rule 201 to vectorize the plurality of target reference samples and then perform fusion on vectorized target reference samples, vectorize the to-be-predicted data to obtain target feature information of the to-be-predicted data, and obtain an output value based on the target feature information.

Finally, the computing module 211 returns the output value to the client device 240 through the I/O interface 212, so that the client device 240 obtains the probability that the target user performs an operation on the target item.

Further, the training device 220 may generate corresponding models/rules 201 based on different data for different purposes, to provide a better result for the user.

In the case shown in FIG. 2, the user may manually specify data to be input to the execution device 210, for example, may perform an operation on an interface provided by the I/O interface 212. In another case, the client device 240 may automatically input data to the I/O interface 212 and obtain a result. If the client device 240 needs to obtain permission of the user for automatically inputting the data, the user may set corresponding permission on the client device 240. The user may view, on the client device 240, a result output by the execution device 210. The result may be specifically presented in a manner of display, sound, an action, or the like. The client device 240 may also serve as a data capture end to store captured data to the database 230.

It should be noted that FIG. 2 is merely a schematic diagram of a system architecture according to an embodiment of the present invention. A location relationship between devices, components, modules, and the like shown in FIG. 2 does not constitute any limitation. For example, in FIG. 2, the data storage system 250 is an external memory relative to the execution device 210. In another case, the data storage system 250 may alternatively be disposed in the execution device 210.

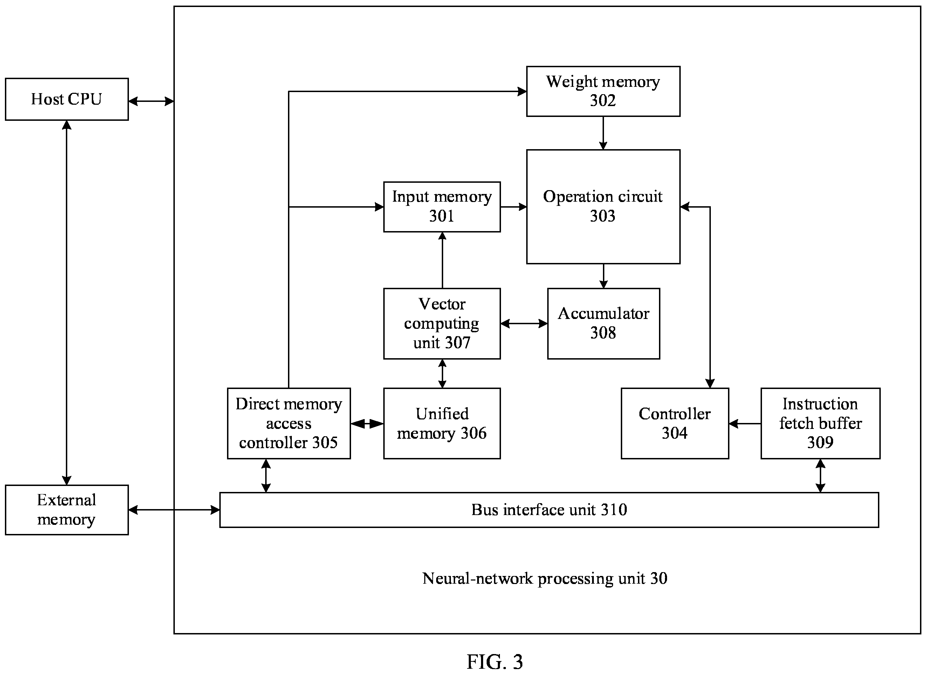

FIG. 3 is a diagram of a hardware structure of a chip according to an embodiment of this application. A neural-network processing unit (Neural-network Processing Unit, NPU) 30 is mounted to a host central processing unit (Central Processing Unit, CPU) as a coprocessor, and the host CPU allocates a task. A core part of the NPU is an operation circuit 303. A controller 304 controls the operation circuit 303 to extract data in a memory (a weight memory 302 or an input memory 301) and perform an operation.

In some implementations, the operation circuit 303 internally includes a plurality of process engines (Process Engine, PE).

In some implementations, the operation circuit 303 is a two-dimensional systolic array. Alternatively, the operation circuit 303 may be a one-dimensional systolic array or another electronic circuit that can perform mathematical operations such as multiplication and addition.

In some implementations, the operation circuit 303 is a general-purpose matrix processor.

For example, it is assumed that there are an input matrix A, a weight matrix B, and an output matrix C. The operation circuit 303 obtains the weight matrix B from the weight memory 302, and buffers the weight matrix B to each PE in the operation circuit 303. The operation circuit 303 obtains the input matrix A and the weight matrix B from the input memory 301 to perform a matrix operation. Some results or final results of a matrix that are obtained are stored in an accumulator (accumulator) 308.

A vector computing unit 307 may perform further processing such as vector multiplication, vector addition, an exponential operation, a logarithmic operation, or value comparison on output of the operation circuit 303. For example, the vector computing unit 307 may be configured to perform network computing such as pooling (Pooling), batch normalization (Batch Normalization), or local response normalization (Local Response Normalization) at a non-convolution/non-(Fully Connected Layers, FC) layer in a neural network.

In some implementations, the vector computing unit 307 buffers a processed vector to a unified memory 306. For example, the vector computing unit 307 may apply a non-linear function to the output, for example, a vector of an accumulated value, of the operation circuit 303, to generate an activation value. In some implementations, the vector computing unit 307 generates a normalized value, a combined value, or both. In some implementations, the processed vector can be used as activation input for the operation circuit 303, for example, can be used at a subsequent layer in the neural network.

For example, in this application, the operation circuit 303 obtains to-be-predicted data from the input memory 301, and obtains a target reference sample from the unified memory 306; and then the operation circuit 303 obtains target feature information of the to-be-predicted data based on the to-be-predicted data and the target reference sample, and obtains, based on the target feature information, an output value, that is, a probability that a target user performs an operation on a target item.

The unified memory 306 is configured to store input data (for example, the to-be-predicted data) and output data (for example, the output value).

A direct memory access controller (Direct Memory Access Controller, DMAC) 305 transfers input data in an external memory to the input memory 301 and/or the unified memory 306, stores weight data in the external memory to the weight memory 302, and stores data in the unified memory 306 to the external memory.

A bus interface unit (Bus Interface Unit, BIU) 310 is configured to implement interaction between the host CPU, the DMAC, and an instruction fetch buffer 309 through a bus.

The instruction fetch buffer (instruction fetch buffer) 309 is configured to store instructions to be used by the controller 304.

The controller 304 is configured to invoke the instructions buffered in the instruction fetch buffer 309, to control an operating process of the operation circuit 303.

Usually, the unified memory 306, the input memory 301, the weight memory 302, and the instruction fetch buffer 309 are all on-chip (On-Chip) memories, and the external memory is a memory outside the NPU. The external memory may be a double data rate synchronous dynamic random access memory (Double Data Rate Synchronous Dynamic Random Access Memory, DDR SDRAM), a high bandwidth memory (High Bandwidth Memory, HBM), or another readable and writable memory.

For ease of understanding this application, the following describes concepts related to this application.

Tabular data (Tabular Data) is also referred to as multi-field categorical data (Multi-Field Categorical Data). As shown in Table 1, each row of tabular data is a data point (also referred to as a sample), and each column represents a feature (also referred to as a field, or referred to as a feature field). Therefore, each sample includes a plurality of feature fields. In addition, a value of a sample in each feature field is referred to as feature field data, and may also be referred to as a field value. For example, LA, NYC, LA, and London in Table 1 are field values of a sample 1, a sample 2, a sample 3, and a sample 4 in a city feature field respectively.

**Table 1**

| Sample | User ID | City | Identity | Item ID | Category | Trademark |
|---|---|---|---|---|---|---|
| Sample 1 | U1 | LA | Student | L1 | T-shirt | B1 |
| Sample 2 | U2 | NYC | Student | L1 | T-shirt | B1 |
| Sample 3 | U1 | LA | Student | L2 | Cell phone | B2 |
| Sample 4 | U3 | London | Manager | L3 | Cell phone | B3 |

When tabular data is used to predict user behavior, a feature field of each sample includes a user feature field and an item feature field, a field value in the user feature field is referred to as user feature field data, and a field value in the item feature field is referred to as item feature field data. Usually, the user feature field data includes user attribute information and a user behavior sequence (optional). The user attribute information includes an identifier (ID), a place of residence, an identity, a gender, an age, and other basic information of a user. The item feature field data includes an ID, a category, a trademark, a size, a color, and other basic information of an item. The user behavior sequence includes historical behavior of the user, for example, an item previously clicked/tapped, browsed, or purchased by the user.

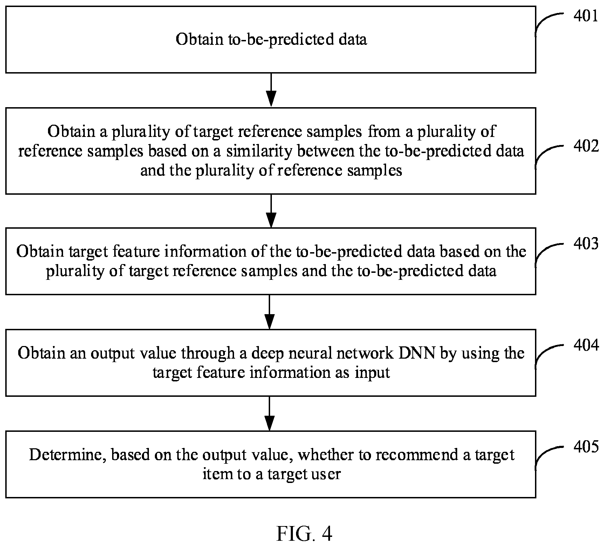

FIG. 4 is a schematic flowchart of a recommendation method according to an embodiment of this application. The method includes the following steps and content.

401: Obtain to-be-predicted data.

The to-be-predicted data is multi-field categorical data, and the to-be-predicted data includes user feature field data and item feature field data.

Optionally, the user feature field data of the to-be-predicted data indicates a feature of a target user. For example, the user feature field data includes attribute information of the target user, for example, an ID, an age, a gender, a place of residence, a place of household registration, and other basic information of the target user.

Optionally, the item feature field data of the to-be-predicted data indicates a feature of a target item. The target item may be a user-related item, for example, a commodity, an application, a song, or a web page. For different target items, feature field data of the target items may be represented in different forms. For example, if the target item is an application, feature field data of the target item includes a type, an installation size, access popularity, a quantity of times of installation, and the like of the application. For another example, if the target item is a song, feature field data of the target item includes a style, a rhythm, duration, a quantity of times of play, play popularity, and the like of the song. For still another example, if the target item is a commodity, feature field data of the target item includes a color, a size, a price, a trademark, a manufacturer, a rating, and the like of the commodity.

Optionally, the user feature field data of the to-be-predicted data may further include a behavior sequence of the target user. For example, the behavior sequence of the target user includes an item previously clicked/tapped, browsed, or purchased by the target user.

402: Obtain a plurality of target reference samples from a plurality of reference samples based on a similarity between the to-be-predicted data and the plurality of reference samples.

For example, a similarity between the to-be-predicted data and each of the plurality of reference samples is obtained, and the plurality of target reference samples are obtained from the plurality of reference samples based on the similarity between the to-be-predicted data and each reference sample.

Each reference sample is also multi-field categorical data, and each reference sample also includes user feature field data and item feature field data. The user feature field data of each reference sample indicates a feature of a reference user, and the item feature field data indicates a feature of a reference item. Similar to the to-be-predicted data, the user feature field data of each reference sample includes attribute information of the reference user, and the item feature field data includes attribute information, such as a color, a shape, a price, and other information, of the reference item. Details are not described herein again.

Each target reference sample and the to-be-predicted data have partially same user feature field data and/or item feature field data. It should be noted that, to ensure that the target reference sample can truly provide reference for the to-be-predicted data, each target reference sample and the to-be-predicted data need to have partially same user feature field data and item feature field data. For example, if the target reference sample and the to-be-predicted data have only partially same user feature field data, for example, both are males, the target reference sample has no reference value for behavior prediction for the to-be-predicted data. Alternatively, the target reference sample and the to-be-predicted data have only partially same item feature field data, for example, both purchased items are black, and the target reference sample has no reference value for behavior prediction for the to-be-predicted data either. Therefore, in actual application, compared with the to-be-predicted data, the obtained target reference sample needs to have both partially same user feature field data and partially same item feature field data.

Usually, the user feature field data included in each reference sample is not completely the same as the user feature field data included in the to-be-predicted data, and the item feature field data included in each reference sample may be completely the same as the item feature field data included in the to-be-predicted data.

It should be noted that the plurality of reference samples may be prestored in the manner shown in Table 1 to form tabular data, or may be stored freely. This falls within the protection scope of this application provided that a plurality of feature fields of the reference samples are the same as a plurality of feature fields of the to-be-predicted data. A manner of storing the plurality of reference samples is not limited.

For example, the plurality of reference samples may be a plurality of raw samples in a sample library, or may be samples selected from a plurality of raw samples. Each raw sample is also multi-field categorical data. Similar to the to-be-predicted data, each raw sample also includes user feature field data and item feature field data. Details are not described again.

Optionally, if the plurality of reference samples are selected from a plurality of raw samples, to quickly obtain the plurality of reference samples from the plurality of raw samples, inverted indexing may be performed on the plurality of raw samples to obtain an inverted list, and the plurality of reference samples are obtained based on the inverted list.

For example, inverted indexing is performed on the plurality of raw samples by using each piece of user feature field data and each piece of item feature field data of each raw sample as elements (item) and by using each raw sample as a document (document), to obtain the inverted list. In this application, the plurality of reference samples only need to be obtained from the plurality of raw samples, and a quantity of times that an element appears in a document or other information is not considered. Therefore, the inverted list in this application may include only a correspondence between an element and a document.

Therefore, a plurality of raw samples shown in Table 1 may be converted into an inverted list shown in Table 2 through inverted indexing.

**Table 2**

| Element | Document |
|---------|----------|
| U1 | Sample 1 and sample 3 |
| U2 | Sample 2 |

(continued)

| Element | Document |
| --- | --- |
| U3 | Sample 4 |
| LA | Sample 1 and sample 3 |
| NYC | Sample 2 |
| London | Sample 4 |
| Student | Sample 1, sample 2, and sample 3 |
| L1 | Sample 1 and sample 2 |
| L2 | Sample 3 |
| L3 | Sample 4 |
| T-shirt | Sample 1 and sample 2 |
| Cell phone | Sample 3 and sample 4 |
| B1 | Sample 1 and sample 2 |
| B2 | Sample 3 |
| B3 | Sample 4 |

Then a plurality of reference samples corresponding to the to-be-predicted data are obtained from the inverted list through indexing by using each piece of user feature field data and each piece of item feature field data of the to-be-predicted data are used as elements. To be specific, a reference sample corresponding to each piece of user feature field data of the to-be-predicted data and a reference sample corresponding to each item feature field are obtained from the inverted list through indexing, and then all reference samples obtained through indexing are combined and deduplicated to obtain the plurality of reference samples. Therefore, compared with the to-be-predicted data, each reference sample has same field data in at least one same feature field, for example, has same field data in a same user feature field. For example, cities of residence are the same.

For example, the to-be-predicted data is [U4, LA, Student, L2, Cell phone, B3]. The U4, LA, Student, L2, Cell phone, and B3 are all used as search terms to obtain, from the inverted list through indexing, a reference sample [sample 1, sample 3] corresponding to the LA, a reference sample [sample 1, sample 2, sample 3] corresponding to the Student, a reference sample [sample 3] corresponding to the L2, and a reference sample [sample 3, sample 4] corresponding to the Cell phone, and a reference sample [sample 4] corresponding to the B3. Then all the reference samples are combined and deduplicated to obtain a plurality of reference samples: [sample 1, sample 2, sample 3, sample 4].

It can be learned that raw samples are first stored in an inverted manner, so that some raw samples may be first obtained from a plurality of raw samples through indexing as a plurality of reference samples. In this way, only a similarity between the to-be-predicted data and the plurality of reference samples needs to be calculated subsequently, and a similarity between the to-be-predicted data and the plurality of raw samples does not need to be calculated, so that calculation pressure is reduced, and a plurality of target reference samples can be quickly obtained.

Further, after the plurality of reference samples are obtained, a similarity between the to-be-predicted data and each reference sample may be obtained. Optionally, the similarity between the to-be-predicted data and each reference sample is obtained by using a BM25 algorithm. Details are not described again.

For example, a reference sample whose similarity is greater than a threshold is used as a target reference sample, to obtain the plurality of target reference samples; or a preset quantity of reference samples are selected from the plurality of reference samples according to a descending order of similarities and are used as the plurality of target reference samples.

403: Obtain target feature information of the to-be-predicted data based on the plurality of target reference samples and the to-be-predicted data.

Optionally, the target feature information includes a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples.

For example, the to-be-predicted data is vectorized to obtain the first target eigenvector group, where the first target eigenvector group includes a plurality of first target eigenvectors.

Optionally, each piece of user feature field data and each piece of item feature field data of the to-be-predicted data are encoded to obtain an eigenvector of the to-be-predicted data. That each piece of user feature field data and each piece of item feature field data of the to-be-predicted data are encoded may be understood as that each piece of user feature field data and each piece of item feature field data of the to-be-predicted data are digitized to obtain the eigenvector of the to-be-predicted data. Then the eigenvector of the to-be-predicted data is mapped to obtain the plurality of first target eigenvectors, where each first target eigenvector represents one piece of feature field data of the to-be-predicted data. To be specific, an encoding result of each piece of feature field data of the to-be-predicted data is mapped to obtain a first target eigenvector corresponding to the feature field data.

It should be noted that, if the to-be-predicted data includes the behavior sequence of the target user, the behavior sequence of the target user is encoded, and an encoding result is mapped to obtain a mapping result; and then fusion is performed on the mapping result corresponding to the behavior sequence of the user to obtain a first target eigenvector corresponding to the behavior sequence of the target user, where the first target eigenvector represents the behavior sequence of the target user.

Optionally, the plurality of first target eigenvectors may be obtained by using a target recommendation model. A training process for the target recommendation model is described in detail below. Details are not described herein.

Specifically, the target recommendation model includes a feature information extraction network and a deep neural network (Deep Neural Networks, DNN). The DNN may be a multi-layer perceptron (Multi-Layer Perceptron, MLP). In this application, an example in which the DNN is an MLP is used for description. Details are not described again. The feature information extraction network includes an encoding layer and a mapping layer (embedding layer). The to-be-predicted data is input to the encoding layer to encode each piece of user feature field data and each piece of item feature field data of the to-be-predicted data, to obtain an eigenvector $(c_1, c_2, c_3, ... , c_n)$ of the to-be-predicted data, where $c_1, c_2, c_3, ... , c_n$ indicates encoding results of a 1st, a 2nd, a 3rd, ..., and an $n$th pieces of feature field data of the to-be-predicted data. Then the eigenvector $(c_1, c_2, c_3, ..., c_n)$ is input to the mapping layer for mapping, to obtain the plurality of first target eigenvectors $(e_1, e_2, e_3, ..., e_n)$. To be specific, the encoding results of the 1st, the 2nd, the 3rd, ..., and the $n$th pieces of feature field data of the to-be-predicted data are separately mapped to obtain the plurality of first target eigenvectors $(e_1, e_2, e_3, ..., e_n)$.

A reference sample may or may not carry label data. The following separately describes a process of obtaining the second target eigenvector group when a reference sample carries a label and a process of obtaining the second target eigenvector group when a reference sample does not carry label data.

When no label data is carried:

For example, each target reference sample is vectorized to obtain a plurality of first eigenvectors of each target reference sample. Optionally, each piece of user feature field data and each piece of item feature field data of each target reference sample are encoded to obtain an eigenvector of each target reference sample; and the eigenvector of each target reference sample is mapped to obtain a plurality of first eigenvectors of each target reference sample, where each first eigenvector represents one piece of feature field data of the target reference sample.

Then fusion is performed on first eigenvectors of the plurality of target reference samples to obtain the second target eigenvector group, where the second target eigenvector group includes a plurality of second target eigenvectors.

For example, a weight corresponding to each target reference sample is determined based on the plurality of first target eigenvectors of the to-be-predicted data and the plurality of first eigenvectors of each target reference sample; and fusion is performed on first eigenvectors of the plurality of target reference samples in a same feature field based on a plurality of weights of the plurality of target reference samples, to obtain the plurality of second target eigenvectors.

Specifically, the plurality of first target eigenvectors of the to-be-predicted data are concatenated to obtain a second eigenvector of the to-be-predicted data; the plurality of first eigenvectors of each target reference sample are concatenated to obtain a second eigenvector of each target reference sample; a similarity between the second eigenvector of the to-be-predicted data and the second eigenvector of each target reference sample is obtained, to obtain a plurality of similarities corresponding to the plurality of target reference samples, where the similarity may be a Euclidean distance, a cosine similarity, or the like; and then the plurality of similarities of the plurality of target reference samples are normalized, and a normalization result corresponding to each target reference sample is used as the weight of each target reference sample. Therefore, a weight of an $i$th target reference sample of the target reference samples may be expressed by using a formula (1):

$$a_i = \frac{similarity(q, r_i)}{\sum_{i=1}^{k} similarity(q, r_i)} \qquad \text{Formula (1)}$$

$a_i$ is the weight of the $i$th target reference sample, q is the second eigenvector of the to-be-predicted data, $r_i$ is a second eigenvector of the $i$th target reference sample, $similarity(q, e_i)$ is a similarity between the second eigenvector of the $i$th target reference sample and the second eigenvector of the to-be-predicted data, and k is a quantity of the plurality of target reference samples.

**EP 4 322 031 A1**

Optionally, fusion, namely, weighting, is performed on first eigenvectors of the plurality of target reference samples in any same feature field (to be specific, each target reference sample corresponds to one first eigenvector in the feature field) based on the weight of each target reference sample, to obtain a second target eigenvector in the feature field; and then fusion is performed on first eigenvectors of the plurality of target reference samples in each same field to obtain the plurality of second target eigenvectors. Therefore, a quantity of the plurality of second target eigenvectors is the same as a quantity of feature fields of the target reference samples. For example, a $j^{th}$ second target eigenvector of the plurality of second target eigenvectors may be expressed by using a formula (2):

$$R_j = \sum_{i=1}^{k} a_i \times e_{ij} \qquad \text{Formula (2)}$$

$R_j$ is the $j^{th}$ second target eigenvector, $e_{ij}$ is a $j^{th}$ first eigenvector of an $i^{th}$ target reference sample, a value of j is an integer ranging from 1 to n, and n is a quantity of a plurality of first eigenvectors of each target reference sample, that is, a quantity of feature fields of each target reference sample, and also the quantity of the plurality of second target eigenvectors.

Optionally, because the plurality of first eigenvectors of each target reference sample are concatenated to obtain the second eigenvector of each target reference sample, after the second eigenvector of each target reference sample is obtained, fusion, namely, weighting, may be directly performed on a plurality of second eigenvectors of the plurality of target reference samples based on the weight of each target reference sample, to obtain a fusion eigenvector. Then the fusion eigenvector is split in an order opposite to an order in which the plurality of first eigenvectors of each target reference sample are concatenated, to obtain the plurality of second target eigenvectors.

It should be understood that, when the plurality of first eigenvectors of the to-be-predicted data and the first eigenvectors of each target reference sample are concatenated, an order in which the plurality of first eigenvectors are concatenated is not limited. However, it needs to be ensured that an order in which the plurality of first eigenvectors of the to-be-predicted data are concatenated is consistent with an order in which the plurality of first eigenvectors of each target reference sample are concatenated.

Optionally, the plurality of second target eigenvectors may alternatively be obtained by using the target recommendation model.

For example, user feature field data and item feature field data of each target reference sample are input to the encoding layer to encode each target reference sample, to obtain an eigenvector of each target reference sample. For example, an eigenvector of an $i^{th}$ target reference sample is $(r_{i1}, r_{i2}, r_{i3}, ... , r_{in})$, where a value of i ranges from 1 to k, and k is a quantity of the plurality of target reference samples. Then the eigenvector of each target reference sample is input to the embedding layer to map the eigenvector of each target reference vector, to obtain the plurality of first eigenvectors of each target reference sample. For example, a plurality of first eigenvectors of the $i^{th}$ target reference sample are $(e_{i1}, e_{i2}, e_{i3}, ... , e_{in})$. Optionally, the feature information extraction network further includes an attention layer. The plurality of first eigenvectors of each target reference sample and the plurality of first target eigenvectors $(e_1, e_2, e_3, ..., e_n)$ of the to-be-predicted data are input to the attention layer, and $(e_1, e_2, e_3, ..., e_n)$ are concatenated to obtain the second eigenvector, namely, $\begin{pmatrix} e_1 \\ e_2 \\ ... \\ e_n \end{pmatrix}$, of the to-be-predicted data. The first eigenvectors of each target reference sample are concatenated to obtain the second eigenvector of each target reference sample. For example, a second eigenvector of the $i^{th}$ target reference sample is $\begin{pmatrix} e_{i1} \\ e_{i2} \\ ... \\ e_{in} \end{pmatrix}$. Then the weight of each target reference sample is determined based on the second eigenvector of the to-be-predicted data and the second eigenvector of each target reference sample. Finally, fusion is performed on the first eigenvectors of the plurality of target reference samples based on the weight of each target reference sample, to obtain the plurality of second target eigenvectors, namely, $(a_1*e_{11} + a_2*e_{21} + \cdots + a_k*e_{k1}, a_1*e_{12} + a_2*e_{22} + \cdots + a_k*e_{k2}, ... , a_1*e_{1n} + a_2*e_{2n} + \cdots + a_k*e_{kn})$. The plurality of second target eigenvectors may be further simplified and expressed as $(e_{n+1}, e_{n+2}, e_{n+3}, ... , e_{2n})$.

When label data is carried:
For example, each reference sample further carries label data, and the label data indicates an actual status of performing an operation by a reference user in a reference sample on a reference item. For example, when the reference item is an application, the label indicates whether the reference user clicks/taps the application. Therefore, in a process of vectorizing each target reference sample to obtain a plurality of first eigenvectors of each target reference sample, in addition to each piece of user feature field data and each piece of item feature field data of each target reference sample, label data of each target reference sample is further synchronously vectorized to obtain the plurality of first eigenvectors of each target reference sample. Therefore, compared with the foregoing case in which no label data is carried, the plurality of first target eigenvectors of each target reference sample that are obtained through vectorization in this case further include a first target eigenvector indicating the label data. Specifically, each piece of user feature field data, each piece of item feature field data, and label data of each target reference sample are encoded to obtain an eigenvector of each target reference sample. For example, an eigenvector of an $i^{th}$ target reference sample is $(r_{i1}, r_{i2}, r_{i3}, ... , r_{in}, r_{i(n+1)})$, where $r_{i(n+1)}$ is an encoding result of label data of the $i^{th}$ target reference sample. Then the eigenvector of each target reference sample is mapped to obtain the plurality of first eigenvectors of each target reference sample. For example, a plurality of eigenvectors of the $i^{th}$ target reference sample are $(e_{i1}, e_{i2}, e_{i3}, ... , e_{in}, e_{i(n+1)})$, where $e_{i(n+1)}$ indicates the label data of the $i^{th}$ target reference sample.

Further, similar to the foregoing fusion, fusion is performed on first eigenvectors of the plurality of target reference samples in a same feature field (including a user feature field, an item feature field, and a label field) based on the calculated weight of each target reference sample, to obtain the second target eigenvector group. To be specific, compared with the foregoing case in which no label data is carried, a plurality of second eigenvectors in the second target eigenvector group obtained through fusion in this case further include a second target eigenvector indicating fusion label data. For example, the second target eigenvector group is $(e_{n+1}, e_{n+2}, e_{n+3}, ... , e_{2n}, e_{2n+1})$, where $e_{2n+1}$ indicates fusion label data of the plurality of target reference samples.

Optionally, in the foregoing case in which no label data is carried or label data is carried, after the first target eigenvector group and the second target eigenvector group are obtained, the first target eigenvector group and the second target eigenvector group may be concatenated to obtain the target feature information, and therefore the target feature information is $( e_1, e_2, e_3 ... , e_n, e_{n+1}, e_{n+2}, e_{n+3}, ... , e_{2n} )$ or $( e_1, e_2, e_3 ..., e_n, e_{n+1}, e_{n+2}, e_{n+3}, ... , e_{2n}, e_{2n+1} )$. Optionally, the first target eigenvector group and the second target eigenvector group may alternatively not be concatenated. For example, both the first target eigenvector group and the second target eigenvector group may be used as input data for subsequent prediction for an output value, to obtain an output value.

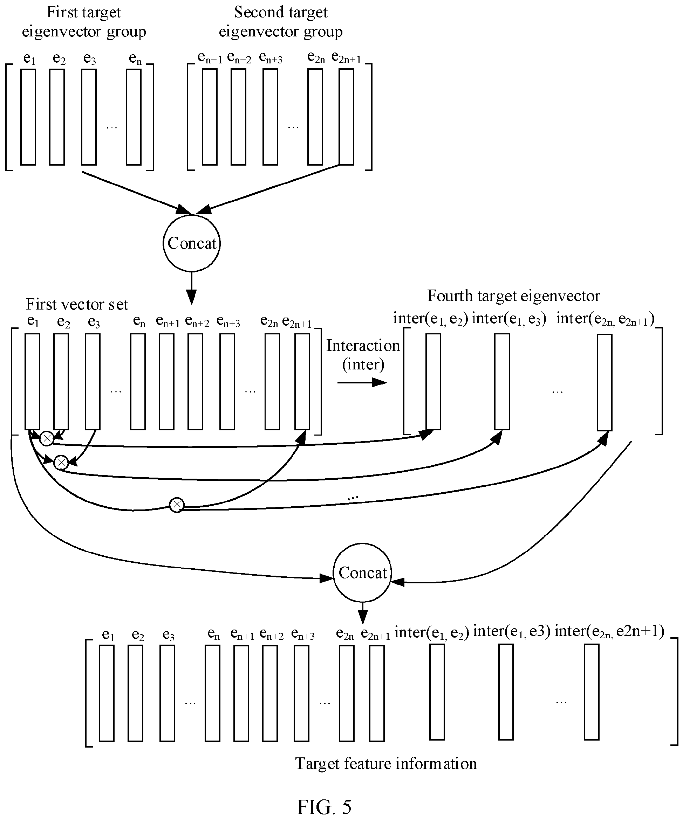

In an implementation of this application, after the first target eigenvector group and the second target eigenvector group are obtained, in addition to concatenation of the first target eigenvector group and the second target eigenvector group, interaction may be further performed between target eigenvectors to obtain higher-order feature information. For example, as shown in FIG. 5, a plurality of first target eigenvectors and a plurality of second target eigenvectors may be first concatenated (concat) to obtain a first vector group; then pairwise interaction is performed between target eigenvectors in the first vector group to obtain a third target eigenvector group; and then the first vector group and the third target eigenvector group are concatenated to obtain target feature information. Similarly, the first vector group and the third target eigenvector group may alternatively not be concatenated, and both may be used as input data. Details are not described again.

For example, a plurality of third target eigenvectors may be expressed by using a formula (3):

$$e_{ij} = \text{inter}(e_i, e_j) \qquad \text{Formula (3)}$$

A value of i ranges from 1 to 2n, a value of j ranges from 2 to 2n, a value of j is greater than i, 2n is a quantity of target eigenvectors in the first vector group, and inter is an interaction operation between vectors.

The pairwise interaction between vectors is mainly to perform fusion on two vectors to obtain one vector, and feature information represented by the vector obtained through fusion is feature information obtained by performing fusion on feature information represented by the two vectors. Optionally, pairwise interaction between vectors may be implemented through dot multiplication between vectors, a kernel product, and a network layer. A manner of interaction between two vectors is not limited in this application, provided that one vector can be obtained through fusion to represent feature information represented by the two vectors.

It should be understood that the foregoing describes only pairwise interaction between eigenvectors, and in actual application, interaction may alternatively be performed between three or more eigenvectors. In addition, during interaction between vectors, pairwise interaction is performed between all target eigenvectors in the first vector group. However, in actual application, some target eigenvectors may alternatively be selected from the first vector group for interaction. For example, interaction may alternatively be performed between only some of the plurality of first target eigenvectors and some of the plurality of second target eigenvectors in the target feature information to obtain a plurality of third target eigenvectors. Therefore, a source of a vector used for interaction and a quantity of vectors used for interaction are not limited in this application.

404: Obtain an output value through a deep neural network DNN by using the target feature information as input.

For example, the target feature information is input to the deep neural network DNN as input data to obtain the output value.

For example, the output value is usually a probability value, and the probability value indicates a probability that a target user performs an operation on a target item. It should be noted that, for different target items, the probability that the target user performs an operation on the target item may be understood in different manners. For example, when the target item is an application, the probability that the target user performs an operation on the target item may be understood as a probability that the target user clicks/taps the application. For another example, when the target item is a song, the probability that the target user performs an operation on the target item may be understood as a probability that the target user likes the song. For still another example, when the target item is a commodity, the probability that the target user performs an operation on the target item may be understood as a probability that the target user purchases the commodity.

In actual application, after the probability value is obtained, the probability value may be post-processed to obtain the output value. For example, when the probability value is greater than a probability threshold, the output value is 1; or when the probability value is less than or equal to the threshold, the output value is 0, where 0 indicates that the target user is not to perform an operation on the target item, and 1 indicates that the target user is to perform an operation on the target item.

405: Determine, based on the output value, whether to recommend the target item to the target user.

Optionally, the output value is represented by binary data of 0 or 1. In this case, when the output value is 1, it is determined that the target item is to be recommended to the target user; or when the output value is 0, it is determined that the target item is not to be recommended to the target user. Optionally, the output value is represented in a form of a probability. In this case, when the probability is greater than a probability threshold, it is determined that the target item is to be recommended to the target user; or when the probability is less than or equal to the probability threshold, it is determined that the target item is not to be recommended to the target user.

It should be noted that, when the recommendation method in this application is applied to a multi-item recommendation scenario, a probability that the target user performs an operation on each candidate item needs to be calculated; and then probabilities of performing operations on a plurality of candidate items are sorted, and a candidate item ranked top is recommended to the target user. For example, during song recommendation, a probability that the target user likes each candidate song needs to be calculated, and then a song with a higher probability of being liked is recommended to the target user.

It can be learned that, in this implementation of this application, in addition to feature information of the to-be-predicted data, the obtained target feature information further includes feature information obtained by vectorizing the plurality of target reference samples and then performing fusion on vectorized target reference samples. Because the target reference sample and the to-be-predicted data have partially same user feature field data and/or item feature field data, user behavior in the target reference sample may provide reference and experience for predicting behavior of the target user. In this way, when the target feature information is used to predict an output value, the predicted output value can be accurate. An item is recommended based on the output value, so that recommendation accuracy is improved.

With reference to a specific model structure, the following describes a process of obtaining an output value in a case in which a reference sample carries label data and interaction is performed between target eigenvectors.

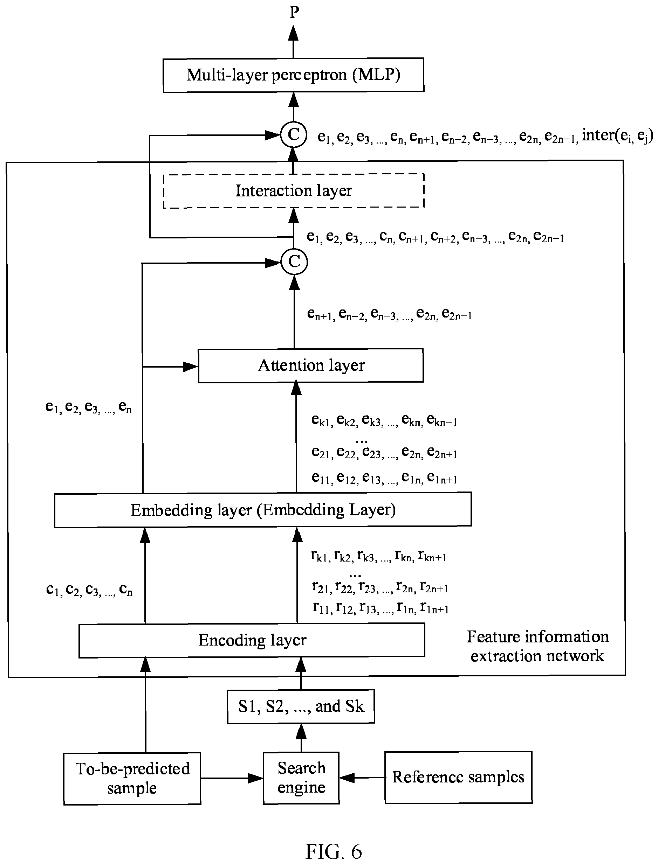

As shown in FIG. 6, a model includes a feature information extraction network and an MLP. The feature information extraction network includes an encoding layer, an embedding layer, an attention layer, and an interaction layer. The interaction layer is optional. The interaction layer needs to be designed when interaction needs to be performed between target eigenvectors. The interaction layer may not be designed if interaction is not to be performed between target eigenvectors.

First, to-be-predicted data is input to a search engine, and k target reference samples, namely, Si, $S_2$, ..., and $S_k$, are obtained from a plurality of reference samples. Then user feature field data and item feature field data of the to-be-predicted data are input to the encoding layer for encoding, to obtain an eigenvector, namely, $(c_1, c_2, c_3, ... , c_n)$, of the to-be-predicted data; and user feature field data, item feature field data, and label data of each target reference sample are input to the encoding layer for encoding, to obtain a plurality of eigenvectors, namely, $(r_{11}, r_{12}, r_{13}, ... , r_{1n}, r_{1n+1})$, $(r_{21}, r_{22}, r_{23}, ... , r_{2n}, r_{2n+1})$, ..., and $(r_{k1}, r_{k2}, r_{k3}, ... , r_{kn}, r_{kn+1})$, that correspond to a plurality of target reference samples. Then $(c_1, c_2, c_3, ... , c_n)$ and $(r_{11}, r_{12}, r_{13}, ... , r_{1n}, r_{1n+1})$, $(r_{21}, r_{22}, r_{23}, ... , r_{2n}, r_{2n+1})$, ..., and $(r_{k1}, r_{k2}, r_{k3}, ... , r_{kn}, r_{kn+1})$ are separately input to the embedding layer to map $(c_1, c_2, c_3, ..., c_n)$ and $(r_{11}, r_{12}, r_{13}, ... , r_{1n}, r_{1n+1})$, $(r_{21}, r_{22}, r_{23}, ... , r_{2n}, r_{2n+1})$, ..., and $(r_{k1}, r_{k2}, r_{k3}, ... , r_{kn}, r_{kn+1})$, to obtain a plurality of first target eigenvectors $(e_1, e_2, e_3 ..., e_n)$ of the to-be-predicted data and a plurality of first eigenvectors, namely, $(e_{11}, e_{12}, e_{13} ..., e_{1n}, e_{1n+1})$, $(e_{21}, e_{22}, e_{23} ... , e_{2n}, e_{2n+1})$, ..., and $(e_{k1}, e_{k2}, e_{k3}, ... , e_{kn}, e_{kn+1})$, of each target reference sample. Then, $(e_1, e_2, e_3, ..., e_n)$, $(e_{11}, e_{12}, e_{13} ... , e_{1n}, e_{1n+1})$, $(e_{21}, e_{22}, e_{23} ... , e_{2n}, e_{2n+1})$, ..., and $(e_{k1}, e_{k2}, e_{k3}, ... , e_{kn}, e_{kn+1})$ are all input to the attention layer to perform fusion on $(e_{11}, e_{12}, e_{13} ... , e_{1n}, e_{1n+1})$, $(e_{21}, e_{22}, e_{23} ... , e_{2n}, e_{2n+1})$, ..., and $(e_{k1}, e_{k2}, e_{k3}, ..., e_{kn}, e_{kn+1})$, to obtain a plurality of second target eigenvectors $(e_{n+1}, e_{n+2}, e_{n+3}, ... , e_{2n}, e_{2n+1})$. Then the plurality of first target eigenvectors $(e_1, e_2, e_3, ..., e_n)$ and the plurality of second target eigenvectors $(e_{n+1}, e_{n+2}, e_{n+3}, ... , e_{2n}, e_{2n+1})$ are concatenated (Concat) to obtain a first vector group, namely, $(e_1, e_2, e_3 ... , e_n, e_{n+1}, e_{n+2}, e_{n+3}, ... , e_{2n}, e_{2n+1})$. Then pairwise interaction is performed between target eigenvectors in the first vector group to obtain a third target eigenvector, namely, $\text{inter}(e_i, e_j)$. The target eigenvectors in the first vector group and the third target eigenvector are concatenated to obtain target feature information, namely, $(e_1, e_2, e_3 ..., e_n, e_{n+1}, e_{n+2}, e_{n+3} ... , e_{2n}, e_{2n+1}, \text{inter}(e_i, e_j))$.

Finally, the target feature information is input to the multi-layer perceptron MLP to obtain an output value.

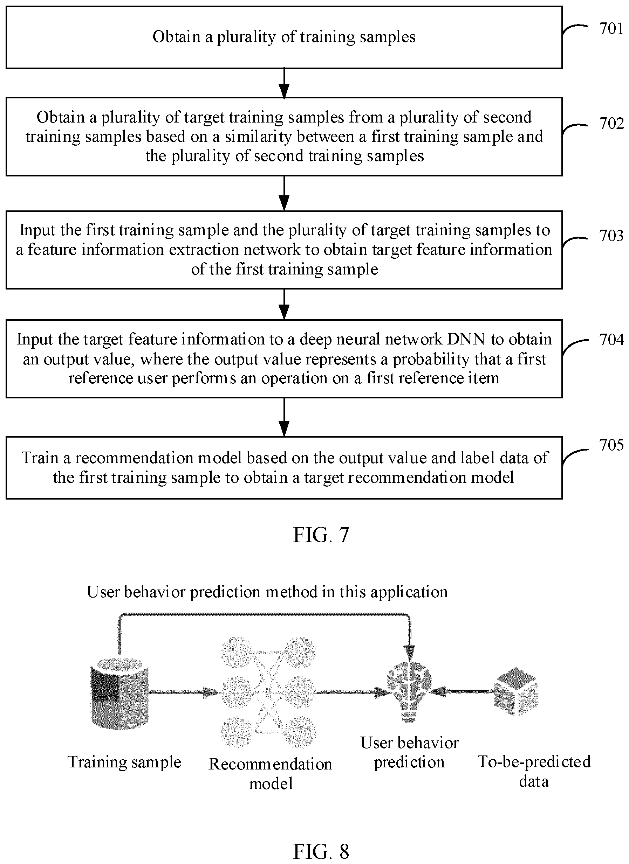

FIG. 7 is a schematic flowchart of a method for training a recommendation model according to an embodiment of this application. The recommendation model includes a feature information extraction network and a multi-layer perceptron MLP. The method includes the following steps and content.

701: Obtain a plurality of training samples.

Each training sample is multi-field categorical data. Similar to the foregoing reference sample, each training sample includes user feature field data and user feature field data. It should be understood that each training sample further carries label data, and the label data of each training sample indicates an actual status of performing an operation by a user in each training sample on an item in the training sample. For example, when the item is an application, the actual status of performing an operation indicates whether the user clicks/taps the application.

It should be noted that the foregoing plurality of reference samples may be the plurality of training samples, or may be some of the plurality of training samples. For example, some training samples with high data integrity are selected from the plurality of training samples as reference samples.

702: Obtain a plurality of target training samples from a plurality of second training samples based on a similarity between a first training sample and the plurality of second training samples.

The first training sample is any one of the plurality of training samples. User-feature field data of the first training sample indicates a feature of a first reference user, and item feature field data of the first training sample indicates a feature of a first reference item. The plurality of second training samples are some or all of the plurality of training samples other than the first training sample.

The first training sample and each target training sample have partially same user feature field data and/or item feature field data. Similarly, in actual application, to ensure a similarity between each target training sample and the first training sample, usually, each target reference sample and the first training sample have partially same user feature field data and item feature field data.

For example, the plurality of target training samples are obtained from the plurality of second training samples based on a similarity between the first training sample and each second training sample. For example, a second training sample whose similarity is greater than a threshold may be used as a target training sample, to obtain the plurality of target training samples; or a preset quantity of second training samples are selected from the plurality of second training samples according to a descending order of similarities and are used as the plurality of target training samples.

It should be understood that all of the plurality of training samples other than the first training sample may be directly used as the plurality of second training samples, and then the similarity between the first training sample and the plurality of second training samples is obtained; or some of training samples other than the first training sample may be selected as the plurality of second training samples in the foregoing inverted indexing manner.

For example, in the foregoing inverted indexing manner, inverted indexing is performed on the plurality of training samples by using each piece of user feature field data and each piece of item feature field data of each training sample as elements and by using each training sample as a document, to obtain an inverted list. Then the plurality of second training samples are obtained from the inverted index by using each piece of user feature field data and each piece of item feature field data of the first training sample as search terms. Therefore, compared with the first training sample, the second training samples have same field data in at least one same feature field. Therefore, when a training sample, compared with the first training sample, has different field data in all same feature fields, the training sample is not used as the second training sample. Therefore, the second training sample may be a training sample of the plurality of training samples other than the first training sample.

703: Input the first training sample and the plurality of target training samples to the feature information extraction network to obtain target feature information of the first training sample.

For example, similar to the recommendation method shown in FIG. 4, the first training sample and each target training sample are input to the feature information extraction network as input data, to obtain the target feature information of the first training sample.

Optionally, the target feature information includes a fourth target eigenvector group (including a plurality of fourth target eigenvectors) and a fifth target eigenvector group (including a plurality of fifth target eigenvectors). A manner of obtaining the plurality of fourth target eigenvectors is similar to the foregoing manner of obtaining the plurality of first target eigenvectors. To be specific, an eigenvector of the first training sample is mapped to obtain the plurality of fourth target eigenvectors. The eigenvector of the first training sample is obtained by encoding each piece of user feature field data and each piece of item feature field data of the first training sample. Details are not described again. Optionally, a manner of obtaining the plurality of fifth target eigenvectors is similar to the foregoing manner of obtaining the plurality of second target eigenvectors. To be specific, the plurality of fifth target eigenvectors are obtained by perform fusion on a plurality of first eigenvectors of the plurality of target training samples in a same feature field. A plurality of first eigenvectors corresponding to each target training sample are obtained by mapping an eigenvector of each target training sample. The eigenvector of each target training sample is obtained by encoding each piece of user feature field data and each piece of item feature field data of each target training sample. Details are not described again either.

Similar to the foregoing manner of obtaining the second eigenvector group, during obtaining of the fifth target eigenvector group, vectorization and fusion may not be performed on label data of target reference samples, or vectorization and fusion may be performed on label data of target reference samples.

Optionally, the target feature information may further include a sixth target eigenvector group (including a plurality of sixth target eigenvectors). A manner of obtaining the plurality of sixth target eigenvectors is similar to the foregoing manner of obtaining the plurality of third target eigenvectors. To be specific, the plurality of fourth target eigenvectors and the plurality of fifth target eigenvectors are concatenated to obtain a second vector group, and then pairwise interaction is performed between target eigenvectors in the second vector group to obtain the plurality of sixth target eigenvectors. Details are not described again.

704: Input the target feature information to a deep neural network DNN to obtain an output value, where the output value represents a probability that the first reference user performs an operation on the first reference item.

The target feature information of the first training sample is input to the multi-layer perceptron of the recommendation model to obtain the output value, that is, predict a status of performing an operation by the first reference user on the first reference item.

705: Train the recommendation model based on the output value and label data of the first training sample to obtain a target recommendation model.

For example, a loss is determined based on the output value and the label data of the first training sample, to be specific, the loss is determined based on the predicted status of performing an operation by the first reference user on the first reference item and an actual status of performing an operation by the first reference user on the first reference item; and a model parameter of a to-be-trained recommendation model is adjusted based on the loss and a gradient descent method, and the recommendation model is trained to obtain the target recommendation model.

It should be understood that training for the recommendation model is iterative training performed by using the plurality of training samples. A training process performed by using each training sample is similar to the training process performed by using the first training sample in FIG. 7, and is not described again. When the recommendation model converges, training for the recommendation model is completed, and the target recommendation model is obtained.

Therefore, based on the foregoing model training method and model application process, a difference shown in FIG. 8 exists between an item recommendation process in this application and a conventional item recommendation process. As shown in FIG. 8, in the conventional item recommendation process, model training is first performed by using a training sample (this is consistent with a conventional supervised training method), and after model training is completed, to-be-predicted data is directly input to a recommendation model for user behavior prediction, to obtain an output value, and whether an item is to be recommended to a user is determined based on the output value. In this application, during user behavior prediction, a recommendation model is first trained by using a training sample (this is consistent with the training method shown in FIG. 7), and after model training is completed, the training sample is used as a reference sample. When to-be-predicted data is obtained, a target training sample corresponding to the to-be-predicted data is first obtained from the training sample. Then the to-be-predicted data and the target training sample are input to a target recommendation model for user behavior prediction, to obtain an output value, and whether an item is to be recommended to a user is determined based on the output value. During user behavior prediction in this application, fusion is performed on feature information of target training samples to obtain abundant target feature information. This improves accuracy of user behavior prediction and accuracy of an output value, so that accurate item recommendation can be performed.

Finally, several common recommendation scenarios in which the recommendation method of this application is applied are described in detail with reference to accompanying drawings.

Application 1: prediction for a click-through probability

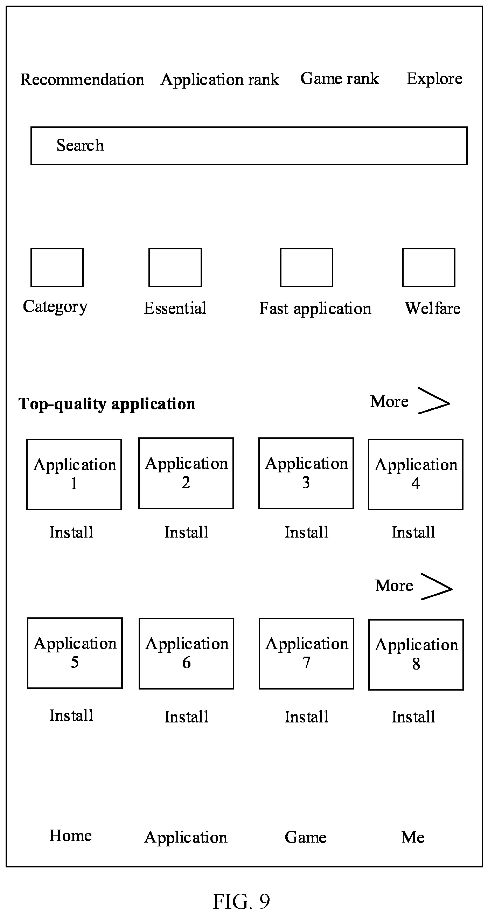

As shown in FIG. 9, for application recommendation, for example, application recommendation in top-quality applications or application recommendation in a top-quality new game ranking list, a plurality of candidate applications are first obtained for each type of application recommendation. Then to-be-predicted data corresponding to each candidate application is constructed based on user feature field data of a target user and item feature field data of each candidate application, to be specific, the user feature field data of the target user and the item feature field data of each candidate application are concatenated into one piece of to-be-predicted data. Then a probability that the target user clicks/taps each candidate application is predicted based on the foregoing recommendation method and the to-be-predicted data. Then the plurality of candidate applications are sorted in descending order of click-through probabilities of the candidate applications, and the sorted plurality of candidate applications or only candidate applications ranked top are displayed on a recommendation page in descending order of click-through probabilities.

In this application, during prediction for a click-through rate, fusion is performed on feature information of target reference samples, so that a predicted click-through rate is more accurate, an application recommended to the target user is more accurate, and a download rate of the application is increased.

Application 2: prediction for a purchase probability

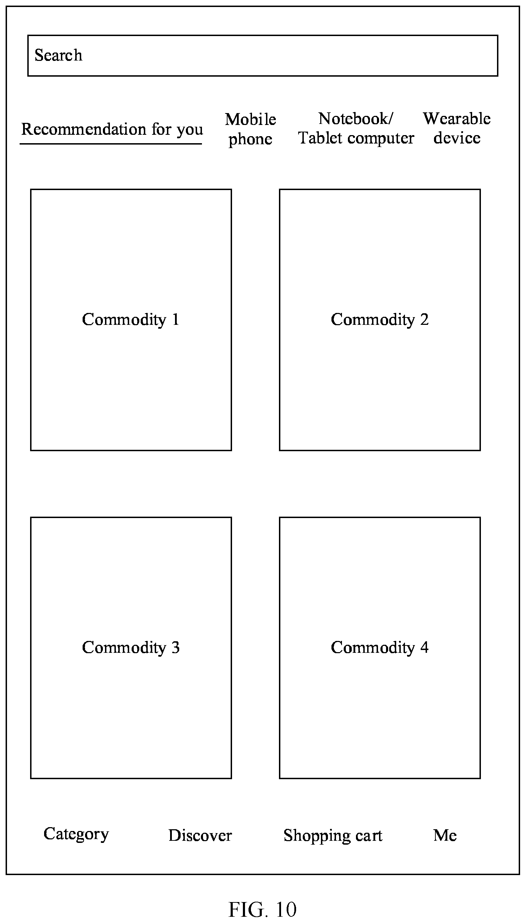

As shown in FIG. 10, for commodity recommendation, to-be-predicted data corresponding to each candidate commodity may be constructed based on item feature field data of each candidate commodity and user feature field data of a target user, to be specific, the user feature field data of the target user and the item feature field data of each candidate commodity are concatenated into one piece of to-be-predicted data. A probability that the target user purchases each candidate commodity is predicted based on the foregoing recommendation method and the to-be-predicted data. Then a plurality of candidate commodities are sorted in descending order of purchase probabilities of the candidate commodities, and the sorted plurality of candidate commodities or only some candidate commodities ranked top are displayed on a recommendation page in descending order of purchase probabilities.

In this application, during prediction for a purchase probability, fusion is performed on feature information of target reference samples, so that a predicted purchase probability is more accurate, a commodity recommended to the target user better meets a requirement of the user, and a sales volume of the commodity is increased.

Application 3: prediction for a song rating

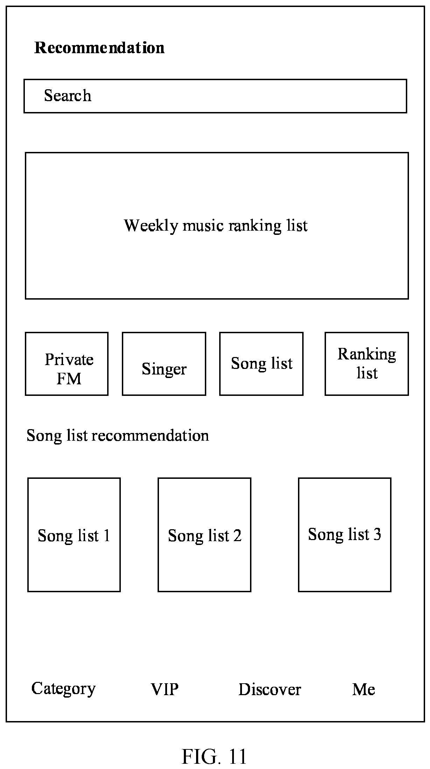

As shown in FIG. 11, for song recommendation, for example, song recommendation in private FM or song recommendation in 30 songs every day, a plurality of candidate songs are first obtained for each type of recommendation, and to-be-predicted data corresponding to each candidate song is constructed based on item feature field data of each candidate song and user feature field data of a target user, to be specific, the user feature field data of the target user and the item feature field data of each candidate song are concatenated into one piece of to-be-predicted data. A rating of each candidate song is predicted based on the foregoing recommendation method and the to-be-predicted data, where the rating of each candidate song represents a degree of preference of the target user for the candidate song. Then the plurality of candidate songs are sorted in descending order of ratings of the candidate songs, and the sorted plurality of candidate songs or only some candidate songs ranked top are displayed on a recommendation page in descending order of ratings.

In this application, during prediction for a song rating, fusion is performed on feature information of target reference samples, so that a predicted rating is more accurate, a recommended song better meets a user requirement, and accuracy of song recommendation is improved.

A user behavior modeling method in this application is compared with a conventional feature interaction-based user behavior modeling method and a conventional user behavior sequence-based user behavior modeling method, and abundant experiments are performed on a CTR estimation task. Experiment settings are as follows.

Experiment setting 1: Quality of prediction accuracy of a model is assessed by using the following test indicators.

The test indicators include an area (Area Under Curve, AUC) enclosed by a receiver operating characteristic curve and a coordinate axis, a loss (Logloss, LL), and relative improvement (relative improvement, REI.Impr). For the test indicator AUC, a larger value indicates better effect of the model. For the test indicator LL, a smaller value indicates better effect of the model. The test REI.Impr indicates improvement of prediction accuracy of a model (RIM) in this application compared with other models. Therefore, for the test indicator REI.Impr, a larger value indicates higher prediction accuracy of the RIM compared with a model in comparison.

Experiment setting 2: A dataset of an application A, a dataset of an application B, and a dataset of an application C are obtained. In the dataset of the application A, the dataset of the application B, and the dataset of the application C, an AUC and an LL of a model for predicting a CTR based on user behavior are tested, and an AUC and an LL of the model in this application during CTR prediction are tested.

Experiment setting 3: A first dataset and a second dataset are obtained. In the first dataset and the second dataset, an AUC and an LL of a model for predicting a CTR based on feature interaction are tested, and an AUC and an LL of the model in this application during CTR prediction are tested. For example, the first dataset may be Avazu, and the second dataset may be Criteo.

The model for predicting a CTR based on user behavior includes HPMN, MIMN, DIN, DIEN, SIM, and UBR. The model for predicting a CTR based on feature interaction includes LR, GBDT, FM, FFM, AFM, FNN, DeepFM, IPNN, PIN, xDeepFM, and FGCNN.

Table 3 and Table 4 show comparison results.

**Table 3 Results of comparison with the model for predicting a CTR based on user behavior**

| Model | Tmall | | | Taobao | | | Alipay | | |
|---|---|---|---|---|---|---|---|---|---|
| | AUC | LL | Rel.Impr | AUC | LL | Rel.Impr | AUC | LL | Rel.Impr |
| HPMN | 0.8526 | 0.4976 | 7.17% | 0.7599 | 0.5911 | 12.68% | 0.7681 | 0.5976 | 4.23% |
| MIMN | 0.8457 | 0.5008 | 8.05% | 0.7533 | 0.6002 | 13.67% | 0.7667 | 0.5998 | 4.42% |
| DIN | 0.8796 | 0.4292 | 3.88% | 0.7433 | 0.6086 | 15.20% | 0.7647 | 0.6044 | 4.69% |
| DIEN | 0.8838 | 0.4445 | 3.39% | 0.7506 | 0.6084 | 14.08% | 0.7502 | 0.6151 | 6.71% |
| SIM | 0.8857 | 0.4520 | 3.17% | 0.7825 | 0.5795 | 9.43% | 0.7600 | 0.6089 | 5.34% |
| UBR | 0.8975 | 0.4368 | 1.81% | 0.8169 | 0.5432 | 4.82% | 0.7952 | 0.5747 | 0.67% |
| RIM | 0.9138 | 0.3804 | 0.00% | 0.8563 | 0.4644 | 0.00% | 0.8006 | 0.5615 | 0.00% |

**Table 4 Results of comparison with the model for predicting a CTR based on feature interaction**

| Model | AUC | Avazu LL | Rel.Impr | AUC | Criteo LL | Rel.Impr |
|---|---|---|---|---|---|---|
| LR | 76.76% | 0.3868 | 2.85% | 78.00% | 0.5631 | 2.98% |
| GBDT | 77.53% | 0.3824 | 1.83% | 78.62% | 0.5560 | 2.07% |
| FM | 77.93% | 0.3805 | 1.31% | 79.09% | 0.5500 | 1.47% |
| FFM | 78.31% | 0.3781 | 0.82% | 79.80% | 0.5438 | 0.56% |
| AFM | 78.06% | 0.3794 | 1.14% | 79.13% | 0.5517 | 1.42% |
| FNN | 78.30% | 0.3778 | 0.83% | 79.87% | 0.5428 | 0.48% |
| DeepFM | 78.36% | 0.3777 | 0.75% | 79.91% | 0.5423 | 0.43% |
| IPNN | 78.68% | 0.3757 | 0.34% | 80.13% | 0.5399 | 0.15% |
| PIN | 78.72% | 0.3755 | 0.29% | 80.18% | 0.5394 | 0.09% |
| xDeepFM | 78.55% | 0.3766 | 0.51% | 80.06% | 0.5408 | 0.24% |
| FGCNN | 78.82% | 0.3747 | 0.16% | 80.22% | 0.5389 | 0.04% |
| RIM | 78.95% | 0.3741 | 0.00% | 80.25% | 0.5387 | 0.00% |

It can be learned from the experiments that, in terms of prediction accuracy, the model in this application achieves best experiment effect on both the AUC indicator and the Logloss indicator. Therefore, when the model in this application is used to predict user behavior, a prediction result is more accurate, and a more accurate output value can be obtained, to perform more accurate recommendation for a user.

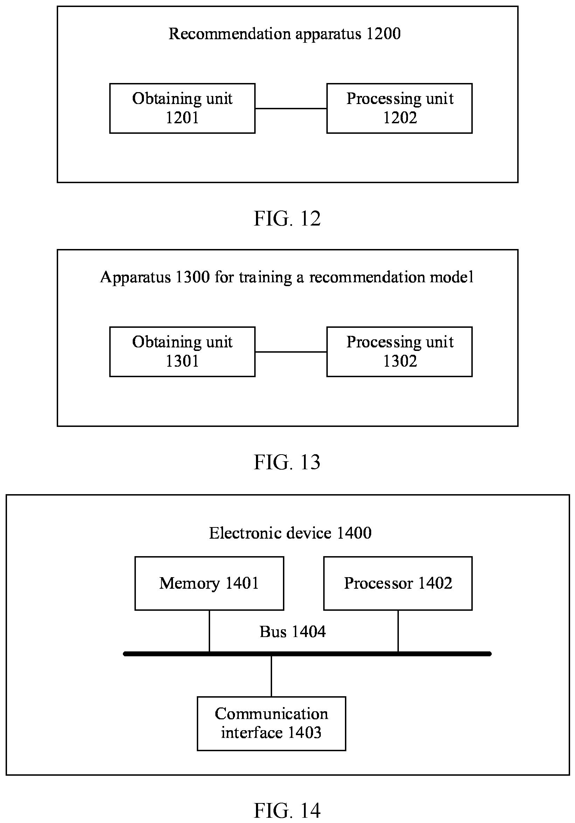

FIG. 12 is a diagram of a structure of a recommendation apparatus according to an embodiment of this application. The recommendation apparatus 1200 includes an obtaining unit 1201 and a processing unit 1202.

The obtaining unit 1201 is configured to obtain to-be-predicted data.

The processing unit 1202 is configured to: obtain to-be-predicted data; obtain a plurality of target reference samples from a plurality of reference samples based on a similarity between the to-be-predicted data and the plurality of reference samples, where each reference sample and the to-be-predicted data each include user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data; obtain target feature information of the to-be-predicted data based on the plurality of target reference samples and the to-be-predicted data, where the target feature information includes a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples; obtain an output value through a deep neural network DNN by using the target feature information as input; and determine, based on the output value, whether to recommend the target item to the target user.

For more detailed descriptions of the obtaining unit 1201 and the processing unit 1202, refer to related descriptions in the method embodiments. Details are not described herein again.

FIG. 13 is a diagram of a structure of an apparatus for training a recommendation model according to an embodiment of this application. The recommendation model includes a feature information extraction network and a deep neural network DNN. The apparatus 1300 for training a recommendation model includes an obtaining unit 1301 and a processing unit 1302.

The obtaining unit 1301 is configured to obtain a plurality of training samples, where each training sample includes user feature field data and item feature field data.

The processing unit 1302 is configured to: obtain a plurality of target training samples from a plurality of second training samples based on a similarity between a first training sample and the plurality of second training samples, where the first training sample is one of the plurality of training samples, the plurality of second training samples are some or all of the plurality of training samples other than the first training sample, user feature field data of the first training sample indicates a feature of a first reference user, item feature field data of the first training sample indicates a feature of a first reference item, and the first training sample and each target training sample have partially same user feature field data and/or item feature field data;

input the first training sample and the plurality of target training samples to the feature information extraction network to obtain target feature information of the first training sample, where the target feature information includes a fourth target eigenvector group and a fifth target eigenvector group, the fourth target eigenvector group is obtained by vectorizing the first training sample through the feature information extraction network, and the fifth target eigenvector group is obtained by vectorizing the plurality of target training samples through the feature information extraction network and then performing fusion on vectorized target training samples;
input the target feature information to the deep neural network DNN to obtain an output value, where the output value represents a probability that the first reference user performs an operation on the first reference item; and
train the recommendation model based on the output value and a label of the first training sample to obtain a target recommendation model.

For more detailed descriptions of the obtaining unit 1301 and the processing unit 1302, refer to related descriptions in the method embodiments. Details are not described herein again.

FIG. 14 is a diagram of a structure of an electronic device according to an embodiment of this application. The electronic device 1400 may be the recommendation apparatus 1200, or a chip or a chip system in the recommendation apparatus 1200. The electronic device may alternatively be the apparatus 1300 for training a recommendation model, or a chip or a chip system in the apparatus 1300 for training a recommendation model.

The electronic device 1400 includes a memory 1401, a processor 1402, a communication interface 1403, and a bus 1404. The memory 1401, the processor 1402, and the communication interface 1403 are communicatively connected to each other through the bus 1404.

The memory 1401 may be a read-only memory (Read Only Memory, ROM), a static storage device, a dynamic storage device, or a random access memory (Random Access Memory, RAM). The memory 1401 may store a program. When the program stored in the memory 1401 is executed by the processor 1402, the processor 1402 and the communication interface 1403 are configured to perform the steps of the data stream transmission method in embodiments of this application.

The processor 1402 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement functions that need to be performed by units in an audio feature compensation apparatus or an audio recognition apparatus in embodiments of this application, or perform the data stream transmission method in the method embodiments of this application.

The processor 1402 may alternatively be an integrated circuit chip and has a signal processing capability. During implementation, the steps of the data stream transmission method in this application may be performed by an integrated logic circuit of hardware in the processor 1402 or through instructions in a form of software. The processor 1402 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1401. The processor 1402 reads information in the memory 1401, and performs, based on hardware of the processor 1402, functions that need to be performed by units included in user equipment or a head-mounted device in embodiments of this application, or perform the steps of the data stream transmission method in the method embodiments of this application.

The communication interface 1403 may be a transceiver apparatus such as a transceiver, to implement communication between the electronic device 1400 and another device or a communication network. The communication interface 1403 may alternatively be an input/output interface, to implement data transmission between the electronic device 1400 and an input/output device. The input/output device includes but is not limited to a keyboard, a mouse, a display, a USB flash drive, and a hard disk. For example, the processor 1402 may obtain to-be-predicted data through the communication interface 1403.

The bus 1404 may include a channel for transmitting information between the components (for example, the memory 1401, the processor 1402, and the communication interface 1403) of the electronic device 1400.

It should be noted that, although only the memory, the processor, and the communication interface are shown in the electronic device 1400 in FIG. 14, during specific implementation, a person skilled in the art should understand that the electronic device 1400 further includes other components required for implementing normal operation. In addition, according to a specific requirement, a person skilled in the art should understand that the electronic device 1400 may further include a hardware component for implementing another additional function. In addition, a person skilled in the art should understand that the electronic device 1400 may alternatively include only a component required for implementing embodiments of this application, and does not need to include all the components shown in FIG. 14.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may or may not be physical units, that is, may be located in one place, or may be distributed on a plurality of network units. Some or all of the units may be selected according to actual requirements to achieve objectives of solutions of embodiments.

In addition, functional units in embodiments of this application may be integrated into one processing unit, each of the units may exist alone physically, or two or more units may be integrated into one unit.

In this application, "at least one" means one or more, and "a plurality of" means two or more. "And/or" describes an association relationship between associated items and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated items. In a formula in this application, the character "/" indicates a "division" relationship between the associated items.

It can be understood that various numbers in embodiments of this application are merely used for differentiation for ease of description, and are not intended to limit the scope of embodiments of this application. Sequence numbers of the foregoing processes do not mean execution sequences. The execution sequences of the processes should be determined based on functions and internal logic of the processes.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A recommendation method, comprising:

    obtaining to-be-predicted data;

obtaining a plurality of target reference samples from a plurality of reference samples based on a similarity between the to-be-predicted data and the plurality of reference samples, wherein each reference sample and the to-be-predicted data each comprise user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data;
obtaining target feature information of the to-be-predicted data based on the plurality of target reference samples and the to-be-predicted data, wherein the target feature information comprises a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples;
obtaining an output value through a deep neural network DNN by using the target feature information as input; and
determining, based on the output value, whether to recommend the target item to the target user.

2. The method according to claim 1, wherein

the plurality of target reference samples further comprise label data; and
that the second target eigenvector group is obtained by vectorizing the plurality of target reference samples and then performing fusion on vectorized target reference samples is specifically as follows:
the second target eigenvector group is obtained by vectorizing user feature field data, item feature field data, and the label data of the plurality of target reference samples and then performing fusion on vectorized data.

3. The method according to claim 1 or 2, wherein
the target feature information further comprises a third target eigenvector group, the third target eigenvector group is obtained by performing pairwise interaction between target eigenvectors in a first vector group, and the first vector group comprises the first target eigenvector group and the second target eigenvector group.

4. The method according to any one of claims 1 to 3, wherein the performing fusion further comprises:

concatenating a plurality of first target eigenvectors in the first target eigenvector group to obtain a second eigenvector of the to-be-predicted data;
concatenating a plurality of first eigenvectors of each target reference sample to obtain a second eigenvector of each target reference sample, wherein the plurality of first eigenvectors of each target reference sample are obtained by vectorizing the target reference sample;
obtaining a similarity between the second eigenvector of each target reference sample and the second eigenvector of the to-be-predicted data;
determining a weight of each target reference sample based on the similarity between the second eigenvector of each target reference sample and the second eigenvector of the to-be-predicted data; and
performing fusion on first eigenvectors of the plurality of target reference samples in a same feature field based on the weight of each target reference sample to obtain the second target eigenvector group.

5. The method according to any one of claims 1 to 4, wherein before the obtaining a plurality of target reference samples from a plurality of reference samples based on a similarity between the to-be-predicted data and the plurality of reference samples, the method further comprises:

obtaining a plurality of raw samples, wherein each raw sample comprises user feature field data and item feature field data; and
performing inverted indexing on the plurality of raw samples by using a plurality of pieces of user feature field data and a plurality of pieces of item feature field data of the to-be-predicted data as elements to obtain the plurality of reference samples.

6. A method for training a recommendation model, wherein the recommendation model comprises a feature information extraction network and a deep neural network DNN, and the method comprises:

obtaining a plurality of training samples, wherein each training sample comprises user feature field data and item feature field data;
obtaining a plurality of target training samples from a plurality of second training samples based on a similarity between a first training sample and the plurality of second training samples, wherein the first training sample is one of the plurality of training samples, the plurality of second training samples are some or all of the plurality of training samples other than the first training sample, user feature field data of the first training sample indicates a feature of a first reference user, item feature field data of the first training sample indicates a feature of a first reference item, and the first training sample and each target training sample have partially same user feature field data and/or item feature field data;

inputting the first training sample and the plurality of target training samples to the feature information extraction network to obtain target feature information of the first training sample, wherein the target feature information comprises a fourth target eigenvector group and a fifth target eigenvector group, the fourth target eigenvector group is obtained by vectorizing the first training sample through the feature information extraction network, and the fifth target eigenvector group is obtained by vectorizing the plurality of target training samples through the feature information extraction network and then performing fusion on vectorized target training samples;

inputting the target feature information to the deep neural network DNN to obtain an output value, wherein the output value represents a probability that the first reference user performs an operation on the first reference item; and

training the recommendation model based on the output value and label data of the first training sample to obtain a target recommendation model.

7. The method according to claim 6, wherein

that the fifth target eigenvector group is obtained by vectorizing the plurality of target training samples and then performing fusion on vectorized target training samples is specifically as follows:

the fifth target eigenvector group is obtained by vectorizing user feature field data, item feature field data, and label data of the plurality of target training samples through the feature information extraction network and then performing fusion on vectorized data.

8. The method according to claim 6 or 7, wherein

the target feature information further comprises a sixth target eigenvector group, the sixth target eigenvector group is obtained by performing pairwise interaction between target eigenvectors in a second vector group through the feature information extraction network, and the second vector group comprises the fourth target eigenvector group and the fifth target eigenvector group.

9. The method according to any one of claims 6 to 8, wherein the performing fusion further comprises:

concatenating a plurality of fourth target eigenvectors in the fourth target eigenvector group to obtain a second eigenvector of the first training sample;

concatenating a plurality of first eigenvectors of each target training sample to obtain a second eigenvector of each target training sample, wherein the plurality of first eigenvectors of each target training sample are obtained by vectorizing the target training sample;

obtaining a similarity between the second eigenvector of each target training sample and the second eigenvector of the first training sample;

determining a weight of each target training sample based on the similarity between the second eigenvector of each target training sample and the second eigenvector of the first training sample; and

performing fusion on first eigenvectors of the plurality of target training samples in a same feature field based on the weight of each target training sample to obtain the fifth target eigenvector group.

10. The method according to any one of claims 6 to 9, wherein before the obtaining a plurality of target training samples from a plurality of second training samples based on a similarity between a first training sample and the plurality of second training samples, the method further comprises:

performing inverted indexing on the plurality of training samples by using a plurality of pieces of user feature field data and a plurality of pieces of item feature field data of the first training sample as elements to obtain the plurality of second training samples.

11. A recommendation apparatus, comprising an obtaining unit and a processing unit, wherein

the obtaining unit is configured to obtain to-be-predicted data; and

the processing unit is configured to: obtain a plurality of target reference samples from a plurality of reference samples based on a similarity between the to-be-predicted data and the plurality of reference samples, wherein each reference sample and the to-be-predicted data each comprise user feature field data and item feature field data, user feature field data of the to-be-predicted data indicates a feature of a target user, item feature field data of the to-be-predicted data indicates a feature of a target item, and each target reference sample and the to-be-predicted data have partially same user feature field data and/or item feature field data;

obtain target feature information of the to-be-predicted data based on the plurality of target reference samples and the to-be-predicted data, wherein the target feature information comprises a first target eigenvector group and a second target eigenvector group, the first target eigenvector group is vectorized to-be-predicted data, and the second target eigenvector group is obtained by vectorizing the plurality of target reference samples and then performing fusion on vectorized target reference samples;

obtain an output value through a deep neural network DNN by using the target feature information as input; and determine, based on the output value, whether to recommend the target item to the target user.

12. The apparatus according to claim 11, wherein

the plurality of target reference samples further comprise label data; and
that the second target eigenvector group is obtained by vectorizing the plurality of target reference samples and then performing fusion on vectorized target reference samples is specifically as follows:
the second target eigenvector group is obtained by vectorizing user feature field data, item feature field data, and the label data of the plurality of target reference samples and then performing fusion on vectorized data.

13. The apparatus according to claim 12, wherein
the target feature information further comprises a third target eigenvector group, the third target eigenvector group is obtained by performing pairwise interaction between target eigenvectors in a first vector group, and the first vector group comprises the first target eigenvector group and the second target eigenvector group.

14. The apparatus according to any one of claims 11 to 13, wherein
in the aspect of performing fusion by the processing unit, the processing unit is specifically configured to:

concatenate a plurality of first target eigenvectors in the first target eigenvector group to obtain a second eigenvector of the to-be-predicted data;
concatenate a plurality of first eigenvectors of each target reference sample to obtain a second eigenvector of each target reference sample, wherein the plurality of first eigenvectors of each target reference sample are obtained by vectorizing the target reference sample;
obtain a similarity between the second eigenvector of each target reference sample and the second eigenvector of the to-be-predicted data;
determine a weight of each target reference sample based on the similarity between the second eigenvector of each target reference sample and the second eigenvector of the to-be-predicted data; and
perform fusion on first eigenvectors of the plurality of target reference samples in a same feature field based on the weight of each target reference sample to obtain the second target eigenvector group.

15. The apparatus according to any one of claims 11 to 14, wherein

before the processing unit obtains the plurality of target reference samples from the plurality of reference samples based on the similarity between the to-be-predicted data and the plurality of reference samples, the processing unit is further configured to: obtain a plurality of raw samples, wherein each raw sample comprises user feature field data and item feature field data; and
perform inverted indexing on the plurality of raw samples by using a plurality of pieces of user feature field data and a plurality of pieces of item feature field data of the to-be-predicted data as elements to obtain the plurality of reference samples.

16. An apparatus for training a recommendation model, wherein the recommendation model comprises a feature information extraction network and a deep neural network DNN, and the apparatus comprises an obtaining unit and a processing unit, wherein

the obtaining unit is configured to obtain a plurality of training samples, wherein each training sample comprises user feature field data and item feature field data;
the processing unit is configured to: obtain a plurality of target training samples from a plurality of second training samples based on a similarity between a first training sample and the plurality of second training samples, wherein the first training sample is one of the plurality of training samples, the plurality of second training samples are some or all of the plurality of training samples other than the first training sample, user feature field data of the first training sample indicates a feature of a first reference user, item feature field data of the first training sample indicates a feature of a first reference item, and the first training sample and each target training sample have partially same user feature field data and/or item feature field data;

input the first training sample and the plurality of target training samples to the feature information extraction network to obtain target feature information of the first training sample, wherein the target feature information comprises a fourth target eigenvector group and a fifth target eigenvector group, the fourth target eigenvector group is obtained by vectorizing the first training sample through the feature information extraction network, and the fifth target eigenvector group is obtained by vectorizing the plurality of target training samples through the feature information extraction network and then performing fusion on vectorized target training samples;

input the target feature information to the deep neural network DNN to obtain an output value, wherein the output value represents a probability that the first reference user performs an operation on the first reference item; and

train the recommendation model based on the output value and a label of the first training sample to obtain a target recommendation model.

17. The apparatus according to claim 16, wherein

that the fifth target eigenvector group is obtained by vectorizing the plurality of target training samples and then performing fusion on vectorized target training samples is specifically as follows:

the fifth target eigenvector group is obtained by vectorizing user feature field data, item feature field data, and label data of the plurality of target training samples through the feature information extraction network and then performing fusion on vectorized data.

18. The apparatus according to claim 16 or 17, wherein

the target feature information further comprises a sixth target eigenvector group, the sixth target eigenvector group is obtained by performing pairwise interaction between target eigenvectors in a second vector group through the feature information extraction network, and the second vector group comprises the fourth target eigenvector group and the fifth target eigenvector group.

19. The apparatus according to any one of claims 16 to 18, wherein

in the aspect of performing fusion by the processing unit, the processing unit is specifically configured to:

concatenate a plurality of fourth target eigenvectors in the fourth target eigenvector group to obtain a second eigenvector of the first training sample;

concatenate a plurality of first eigenvectors of each target training sample to obtain a second eigenvector of each target training sample, wherein the plurality of first eigenvectors of each target training sample are obtained by vectorizing the target training sample;

obtain a similarity between the second eigenvector of each target training sample and the second eigenvector of the first training sample;

determine a weight of each target training sample based on the similarity between the second eigenvector of each target training sample and the second eigenvector of the first training sample; and

perform fusion on first eigenvectors of the plurality of target training samples in a same feature field based on the weight of each target training sample to obtain the fifth target eigenvector group.

20. The apparatus according to any one of claims 16 to 19, wherein

before the processing unit obtains the plurality of target training samples from the plurality of second training samples based on the similarity between the first training sample and the plurality of second training samples, the processing unit performs inverted indexing on the plurality of training samples by using a plurality of pieces of user feature field data and a plurality of pieces of item feature field data of the first training sample as elements to obtain the plurality of second training samples.

21. An electronic device, comprising: a memory, configured to store a program; and a processor, configured to execute the program stored in the memory, wherein when the program stored in the memory is executed, the processor is configured to implement the method according to any one of claims 1 to 5 or claims 6 to 10.

22. A computer-readable storage medium, wherein the computer-readable storage medium stores program code to be executed by a device, and the program code is used to implement the method according to any one of claims 1 to 5 or claims 6 to 10.

23. A computing program product, wherein when the computing program product runs on a computer, the computer is enabled to implement the method according to any one of claims 1 to 5 or claims 6 to 10.

24. A chip, wherein the chip comprises a processor and a data interface, and the processor reads, through the data interface, instructions stored in a memory, to implement the method according to any one of claims 1 to 5 or claims 6 to 10.

FIG. 1

FIG. 2

FIG. 3

Obtain to-be-predicted data — 401

Obtain a plurality of target reference samples from a plurality of reference samples based on a similarity between the to-be-predicted data and the plurality of reference samples — 402

Obtain target feature information of the to-be-predicted data based on the plurality of target reference samples and the to-be-predicted data — 403

Obtain an output value through a deep neural network DNN by using the target feature information as input — 404

Determine, based on the output value, whether to recommend a target item to a target user — 405

FIG. 4

First target
eigenvector group

Second target
eigenvector group

$e_1$ $e_2$ $e_3$ $e_n$ $e_{n+1}$ $e_{n+2}$ $e_{n+3}$ $e_{2n}$ $e_{2n+1}$

Concat

First vector set

$e_1$ $e_2$ $e_3$ $e_n$ $e_{n+1}$ $e_{n+2}$ $e_{n+3}$ $e_{2n}$ $e_{2n+1}$

Fourth target eigenvector

$inter(e_1, e_2)$ $inter(e_1, e_3)$ $inter(e_{2n}, e_{2n+1})$

Interaction
(inter)

Concat

$e_1$ $e_2$ $e_3$ $e_n$ $e_{n+1}$ $e_{n+2}$ $e_{n+3}$ $e_{2n}$ $e_{2n+1}$ $inter(e_1, e_2)$ $inter(e_1, e3)$ $inter(e_{2n}, e2n+1)$

Target feature information

FIG. 5

P

↑

| Multi-layer perceptron (MLP) |

↑

Ⓒ $e_1, e_2, e_3, ..., e_n, e_{n+1}, e_{n+2}, e_{n+3}, ..., e_{2n}, e_{2n+1}, inter(e_i, e_j)$

| Interaction layer |

$e_1, e_2, e_3, ..., e_n, e_{n+1}, e_{n+2}, e_{n+3}, ..., e_{2n}, e_{2n+1}$

Ⓒ

↑

$e_{n+1}, e_{n+2}, e_{n+3}, ..., e_{2n}, e_{2n+1}$

| Attention layer |

$e_{k1}, e_{k2}, e_{k3}, ..., e_{kn}, e_{kn+1}$
...
$e_{21}, e_{22}, e_{23}, ..., e_{2n}, e_{2n+1}$
$e_{11}, e_{12}, e_{13}, ..., e_{1n}, e_{1n+1}$

$e_1, e_2, e_3, ..., e_n$

| Embedding layer (Embedding Layer) |

$r_{k1}, r_{k2}, r_{k3}, ..., r_{kn}, r_{kn+1}$
...
$r_{21}, r_{22}, r_{23}, ..., r_{2n}, r_{2n+1}$
$r_{11}, r_{12}, r_{13}, ..., r_{1n}, r_{1n+1}$

$c_1, c_2, c_3, ..., c_n$

| Encoding layer |

Feature information
extraction network

| S1, S2, ..., and Sk |

| To-be-predicted sample | → | Search engine | ← | Reference samples |

FIG. 6

34

Obtain a plurality of training samples — 701

Obtain a plurality of target training samples from a plurality of second training samples based on a similarity between a first training sample and the plurality of second training samples — 702

Input the first training sample and the plurality of target training samples to a feature information extraction network to obtain target feature information of the first training sample — 703

Input the target feature information to a deep neural network DNN to obtain an output value, where the output value represents a probability that a first reference user performs an operation on a first reference item — 704

Train a recommendation model based on the output value and label data of the first training sample to obtain a target recommendation model — 705

FIG. 7

User behavior prediction method in this application

| Training sample | Recommendation model | User behavior prediction | To-be-predicted data |

FIG. 8

Recommendation   Application rank   Game rank   Explore

| Search |
|---|

Category        Essential        Fast application        Welfare

**Top-quality application**                                More >

| Application 1 | Application 2 | Application 3 | Application 4 |
|---|---|---|---|
| Install | Install | Install | Install |

More >

| Application 5 | Application 6 | Application 7 | Application 8 |
|---|---|---|---|
| Install | Install | Install | Install |

Home        Application        Game        Me

FIG. 9

Search

Recommendation for you    Mobile    Notebook/    Wearable
phone    Tablet computer    device

Commodity 1

Commodity 2

Commodity 3

Commodity 4

Category      Discover      Shopping cart      Me

FIG. 10

**Recommendation**

| Search |
| --- |

| Weekly music ranking list |
| --- |

| Private FM | Singer | Song list | Ranking list |
| --- | --- | --- | --- |

Song list recommendation

| Song list 1 | Song list 2 | Song list 3 |
| --- | --- | --- |

| Category | VIP | Discover | Me |
| --- | --- | --- | --- |

FIG. 11

Recommendation apparatus 1200

| Obtaining unit 1201 | Processing unit 1202 |

FIG. 12

Apparatus 1300 for training a recommendation model

| Obtaining unit 1301 | Processing unit 1302 |

FIG. 13

Electronic device 1400

| Memory 1401 | Processor 1402 |

Bus 1404

Communication interface 1403

FIG. 14

<table>
<tr><td colspan="2"><strong>INTERNATIONAL SEARCH REPORT</strong></td><td>International application No.<br><br>**PCT/CN2022/109297**</td></tr>
</table>

**A. CLASSIFICATION OF SUBJECT MATTER**

G06F 16/9535(2019.01)i

According to International Patent Classification (IPC) or to both national classification and IPC

**B. FIELDS SEARCHED**

Minimum documentation searched (classification system followed by classification symbols)

G06F; G06Q; G06N

Documentation searched other than minimum documentation to the extent that such documents are included in the fields searched

Electronic data base consulted during the international search (name of data base and, where practicable, search terms used)

CNKI, CNPAT, WPI, EPODOC: 推荐, 训练, 样本, 模型, 用户特征, 物品特征, 相似度, 深度神经网络, recommendation, training, sample, model, user information, object information, similarity, deep neural networks, DNN

**C. DOCUMENTS CONSIDERED TO BE RELEVANT**

| Category* | Citation of document, with indication, where appropriate, of the relevant passages | Relevant to claim No. |
|---|---|---|
| PX | CN 113722583 A (HUAWEI TECHNOLOGIES CO., LTD.) 30 November 2021 (2021-11-30) claims 1-22, description, paragraphs [0002]-[0245], and figures 1-14 | 1-24 |
| Y | CN 111259263 A (TENCENT CLOUD COMPUTING (BEIJING) CO., LTD.) 09 June 2020 (2020-06-09) description, paragraphs [0100]-[0251], and figures 1-6 | 1-24 |
| Y | CN 109299396 A (NORTHEAST NORMAL UNIVERSITY) 01 February 2019 (2019-02-01) description, paragraphs [0002]-[0003] and [0056]-[0107], and figures 1-3 | 1-24 |
| A | CN 111881363 A (BEIJING UNIVERSITY OF TECHNOLOGY) 03 November 2020 (2020-11-03) entire document | 1-24 |
| A | CN 112632403 A (BEIJING BAIDU NETCOM SCIENCE AND TECHNOLOGY CO., LTD.) 09 April 2021 (2021-04-09) entire document | 1-24 |
| A | WO 2021081962 A1 (HUAWEI TECHNOLOGIES CO., LTD.) 06 May 2021 (2021-05-06) entire document | 1-24 |
| A | US 2020272913 A1 (HUAWEI TECHNOLOGIES CO., LTD.) 27 August 2020 (2020-08-27) entire document | 1-24 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 September 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/109297**

**C.    DOCUMENTS CONSIDERED TO BE RELEVANT**

| Category* | Citation of document, with indication, where appropriate, of the relevant passages | Relevant to claim No. |
|---|---|---|
| A | 薛峰 等 (XUE, Feng et al.). "基于深度神经网络和加权隐反馈的个性化推荐 (Personalized Recommendation Algorithm Based on Deep Neural Network and Weighted Implicit Feedback)" 模式识别与人工智能 *(Pattern Recognition and Artificial Intelligence),* 30 April 2020 (2020-04-30), entire document | 1-24 |

Form PCT/ISA/210 (second sheet) (January 2015)

**INTERNATIONAL SEARCH REPORT**
Information on patent family members

International application No.

**PCT/CN2022/109297**

| Patent document cited in search report | | | Publication date (day/month/year) | Patent family member(s) | | | Publication date (day/month/year) |
|---|---|---|---|---|---|---|---|
| CN | 113722583 | A | 30 November 2021 | None | | | |
| CN | 111259263 | A | 09 June 2020 | None | | | |
| CN | 109299396 | A | 01 February 2019 | None | | | |
| CN | 111881363 | A | 03 November 2020 | None | | | |
| CN | 112632403 | A | 09 April 2021 | None | | | |
| WO | 2021081962 | A1 | 06 May 2021 | US | 2021248651 | A1 | 12 August 2021 |
| | | | | EP | 3862893 | A1 | 11 August 2021 |
| | | | | CN | 113508378 | A | 15 October 2021 |
| US | 2020272913 | A1 | 27 August 2020 | CN | 109902222 | A | 18 June 2019 |
| | | | | WO | 2020107806 | A1 | 04 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110877429